# EUROPEAN PATENT APPLICATION

(11) **EP 1 477 068 A1**
(43) Date of publication of application: **17.11.2004**
(21) Application number: 04011565.1
(22) Date of filing: 14.05.2004
(51) Int. Cl.: A22C 11/10, A22C 11/12

(54) **Tying machine for food products**

(30) Priority: 16.05.2003 EP 03011241
(71) Applicant: Antonio Borgo & C. S.A.S., 36016 Thiene (Vicenza) (IT)
(72) Inventor: Borgo, Antonio, 36016 Thiene (Vicenza) (IT)
(74) Representative: Grünecker, Kinkeldey, Stockmair & Schwanhäusser Anwaltssozietät

(57) **Abstract**

A tying machine for stuffed products containing a paste such as salamis, wursts, sausages, or the like, but also salami comprising vegetables, said tying machine comprising a pair of jaws adapted to crimp or squeeze a casing filled with said paste and tying means adapted to realize one or more ties of a string or cord in correspondence with the crimped portions of the casing. Moreover, the tying machine comprises means adapted to advance the stuffed products along a predefined advancing direction and one more devices adapted to keep the stuffed products in a substantially resting condition. Said advancing means and said means for keeping the stuffed products in a substantially resting condition comprise gripping means adapted to alternatively exert a grip on the stuffed products.

## Description

The present invention relates to the preparation of food products. In particular, the present invention relates to the preparation of stuffed food products. In more detail, the present invention relates to a tying machine for the preparation of stuffed food products containing meat or vegetables such as, for example, salami, sausages, wursters, but also soya salamis or the like.

### DESCRIPTION OF THE PRIOR ART

It is known that traditional stuffed products such as salami and sausages or so-called "cacciatori" are prepared by filling a tubular food casing with a paste containing meat, salt and seasonings. In particular, the food casing may be a casing originating from animals, or a rubber or synthetic casing, for instance, containing collagen. During the stuffing operation, the stuffed casing is squeezed or crimped at regular intervals or at predefined positions and ties are applied by winding a string or cord several times around the crimped portions. In this way, the stuffed casing is separated into discrete links or singular stuffed products, with two adjacent or consecutive stuffed products being connected by a crimped portion or, in other words, a chain of discrete stuffed products is formed. When the stuffed food products are sold or consumed, a predefined number of them may be separated from the chain by cutting the chain in correspondence of a crimped portion.

During the years, with the purpose of meeting and or accomplishing the exigencies of the consumers, the producers of stuffed products were oriented towards a production system allowing the realization of slightly elongated crimped portions between two consecutive stuffed products, i.e.,. between two consecutive sausages or salamis. In particular, elongated crimped portions have been formed of a length comprised substantially between 10 to 30 mm depending on the circumstances, with "double" ties formed along the elongated crimp portions, i.e. with ties or knots formed in proximity of both end portions of each elongated crimped portion. This is substantially due to the fact that the elongated crimped portions allow to simplify the separation of two consecutive discrete sausages. In fact, when such an elongated crimped portion is cut in the middle, the ties at both end portions of the elongated crimped portion are not cut as in the case of "simple" or "short" crimped portions. On the contrary, elongated crimped portions may be cut without cutting or damaging the ties at both end portions of a crimped portion. Moreover, the risk is avoided that the food casing in proximity of the end portions of the sausages be damaged during separation of two consecutive adjacent sausages. This represents a very important advantage since the stuffed products may be better stored and seasoned once they have been prepared. On the contrary, the quality of the stuffed products would be compromised if the ties would be cut or the casing would be damaged or opened during separation of two consecutive sausages.

A further advantage offered by elongated crimped portions relate to the fact that the chains of stuffed products normally comprise a predefined number of discrete links or products, usually between 5 and 10 but also till 20 and more. Accordingly the provision of elongated crimped portions allows the chains to be better handled by the operators. For instance, the chain may be better rolled up without running the risk that the end portions of the discrete links be squeezed, thus reducing or compromising the quality of the stuffed products. Moreover, it is avoided that two consecutive links or sausages come into direct contact, thus warranting a very good storage and seasoning of the stuffed products.

It revealed furthermore to be necessary, to prepare chains of stuffed products, wherein the cord between the ties at both end portions of each stuffed product, (sausage, wurster, salami etc,) is not rolled up on the stuffed product; on the contrary, it is necessary that the portion of cord between the two end portions of each stuffed product be s ubstantially rectilinea and that t he cord be adequately tied and tensioned.

Finally, the need arose from the producers for stuffed products wherein the tubular casing is adequately filled, so that the stuffed products have a good consistency and density and be free of voids or holes.

Several automatic and/or semi-automatic tying machines are known in the art for the preparation of stuffed products such as sausages and/or salami. In particular, tying machines are known which are adapted to be supplied or fed with a tubular food casing stuffed or filled with a meat paste. The known tying machines are adapted to subsequently exploit the crimping operation and to apply ties by winding a string or cord on the crimped portions so as to separate the stuffed tubular case into a chain of discrete links, wherein two adjacent links are connected by an elongated crimped portion having the shape and dimension of a little stalk.

For instance, the European patent application EP 0865732 discloses a tying machine comprising a conduit adapted to be fed with a stuffed tubular casing and a spool placed in proximity of the inlet portion of said conduit. The spool is adapted to be rotated around the conduit, so that each rotation of the spool results in a winding of the string being formed on the tubular casing. Moreover, the known tying machine comprises two pairs of jaws adapted to crimp or squeeze the filled casing and placed one upstream with respect to the other in the direction of feeding of the tubular casing. The pair of jaws placed upstream is fixed, i.e. may not be reciprocated and is disposed outside the conduit. On the contrary, the pair of jaws placed downstream may be reciprocated and is received inside the conduit.

During operations, once a portion of casing has been stuffed or filled and introduced into the conduit, both pairs of jaws are closed so as to form a first crimp. Subsequently, a first tie is wrapped once or several times around the crimp between the two pairs of jaws with a string or cord. As will become more apparent in the following, the position of said first tie corresponds to the downstream end portion of the elongated crimp portion to be realized, i.e. to the end portion of the elongated crimp portion placed downstream in the direction of feeding of the tubular casing. Then, both pairs of jaws are maintained in their closed position and the d isplaceable p air of jaws is t ranslated i nto t he d irection of feeding of the casing, so as to pull or trail the casing, thus forcing the casing to go through the fixed pair of jaws. In this way, an elongated crimped portion is formed; in fact, the distance covered by the displaceable pair of jaws corresponds to the predefined length of the elongated crimp portion. F inally, a second tie is formed in proximity of the fixed pair of closed jaws, that is in proximity of the end portion of the elongated crimp portion placed upstream in the direction of feeding of the tubular casing.

The tying machine described above is affected by several disadvantages.

For instance, the general structure of the machine is rendered quite complex by the fact that two pairs of jaws are needed. It results therefore that assembling the machine is a quite difficult and time consuming operation and that the maintenance of the machine is also difficult and complex. Moreover, the pair of jaws inside the feeding conduit may obstruct the conduit so as to prevent the tubular casing from advancing within the conduit with the risk that the tubular casing may get broken or damaged.

A further tying machine of the type disclosed above is known from the European patent application EP 00109962 filed by the applicant of the present application. This second tying machine is equipped with a single pair of jaws which may be reciprocated together with a spool along the direction of feeding of the stuffed tubular casing. A first tie is realized by gathering or closing the jaws so as to crimp the casing a nd subsequently winding a string or cord once or more times around the first crimp. Subsequently, the jaws are maintained in the closed position a nd are translated together with the spool in the direction of feeding of the tubular casing. In particular, the jaws are translated along a predefined distance so as to pull or remove a predefined portion of tubular casing from the stuffing horn of the stuffing machine. The jaws are then opened and translated back to the initial position together with the spool. Finally, the jaws are gathered or closed once again so as to form a second crimp and a second tie is formed in correspondence to said second crimp.

Also this tying machine is not free from disadvantages.

For instance, the fact that the jaws and the spool are reciprocated together, slows down the tying operation. In fact, in the case of this machine, the elongated crimped portions are realized by crimping the food casing at two different positions placed at a distance corresponding to the length of the elongated crimped portions.

Moreover, the elongated crimped portions are not completely empty or free from meat paste but may contain small quantities of meat paste; in particular, this is due to the fact that the two crimps at both ends of the elongated crimped portions are executed on a tubular casing which may contain portions of meat paste.

A further disadvantage of the prior art tying machine disclosed above relates to the fact that, during the tying operation, the stuffed products are brought to rotate on a longitudinal axis, substantially parallel to the direction along which the stuffed products are advanced during the operation; accordingly, also the portion of string or cord connecting the ties at both ends of each stuffed product is wound around the stuffed product. It results therefore that the chains of stuffed product may not be easily handled and managed; for instance, it becomes difficult to prepare the stuffed product for seasoning In particular, preparing the stuffed product for seasoning may not be executed by means of machines but may only be manually performed by an operator so that the working time drastically increases. Moreover, the risk arises that the stuffed casing gets damaged or may be cut by the string or cord.

In view of the situation as described above, it would be desirable to provide a machine for the preparation of food products allowing to overcome or at least to limit the disadvantages effecting the prior art machines. In particular, it would be desirable to provide a tying machine for tying stuffed products allowing to overcome the disadvantages of the prior art tying machines described above.

### SUMMARY OF THE PRESENT INVENTION

In general, the present invention relates to a machine or a device for the preparation of food products. In particular, the present invention relates to a machine for the preparation of stuffed food products such as salami, sausages or similar stuffed products containing meat, as well as stuffed products containing vegetables such as for example soya or the like. In more detail, the present invention relates to a tying machine for tying stuffed products allowing to realize strong ties, so that the compactness of the stuffed products is improved and the needs of the consumer are met.

The tying machine according to the present invention offers the further advantage that the stuffed or filled casing may be automatically substantially immobilized or kept in a resting condition by means of a device adapted to this end; in particular, the immobilizing or clamping device is adapted to subsntuially immobilize or clamp the stuffed casing gently but, at the same time strongly, thus avoiding that the stuffed casing may be rotated during formation of the ties. The problem is therefore avoided that, during the tying operations, the portion of cord between the two ties at both end portions of each stuffed product be wound around the stuffed product, thus allowing the preparation of stuffed products which are adequately filled, compact and consistent.

Moreover, the tying machine according to the present invention allows that the stuffed products be automatically advanced during the tying operations; to this end, the tying machine is equipped with adequate advancing means, comprising gripping or clamping means adapted to alternatively exert a grip on the stuffed products.

It is also possible, with the tying machine according to the present invention, to prepare stuffed products with a predefined curvature, so as to better accomplish or meet the exigencies of the consumers. In fact, by adequately selecting the position of the feeding conduit, it is possible to accentuate or reduce the typical "banana" shape normally conferred to the stuffed products during the tying operation. Moreover, the curvature of the stuffed products may also be determined by selecting or setting the tension of the string or cord.

A further advantage offered by the tying machine according to the present invention relates to the simple structure of the machine. In fact, the machine according to the present invention comprises a single pair of jaws for crimping the tubular casing. Moreover, the way the levers for actuating the jaws are realized allows to avoid that the levers interfere or come into contact with the stuffed products. Accordingly, the risk is avoided that the stuffed products are damaged by the jaws or by the actuating levers.

Another aspect of the machine according to the present invention has revealed to be particularly advantageous namely, that fact that, in the machine according to the present invention, the tying means have a simple and easy structure. This allows in particular to form very strong and reliable ties, with the string or cord being firmly wound on the tubular casing, thus avoiding the risk that the ties can get untied during the operations subsequent to the stuffing operation, for instance, during the packaging operations and/or during the seasoning of the stuffed products.

Finally, the general structure of the machine according to the present invention allows to simplify the tying operations, thus reducing the risk of breakdowns, failures and interruptions during the tying operations. Accordingly, the working time is reduced and the preparation yields are improved leading to low costs for the preparation of the stuffed products.

To this end, according to a first embodiment the present invention relates to a tying machine for the preparation of stuffed products as claimed in claim 1 namely a tying machine for tying by means of a string or cord stuffed products containing a paste, said machine being adapted to be fed or supplied with a tubular casing filled with said paste along a predefined feeding direction or supplying direction; the machine further comprises tying means adapted to wind a portion of string or cord on said tubular casing and at least a device adapted to receive said filled casing and to keep said casing in a substantially resting condition.

According to another embodiment, the present invention relates to a tying machine as claimed in claim 3 namely a tying machine comprising a hollow body adapted to receive the filled casing; moreover, gripping means are received inside said hollow body, with said gripping means being adapted to alternatively exert a grip on said filled casing.

According to a further embodiment as claimed in claim 5 said gripping means comprise a body for an elastic material received inside said hollow body so as to define a hollow space adapted to be alternatively filled and emptied with a liquid or gas through a conduit provided in the hollow body.

According to still a further embodiment the present invention relates to a tying machine as claimed in claim 6, namely a machine wherein said tying machine comprises advancing means adapted to advance said stuffed products along a predefined advancing direction, substantially corresponding to said predefined feeding direction.

According to still another embodiment, the present invention relates to a tying machine as claimed in claim 8 namely a tying machine wherein said gripping means comprises means received inside main body, the volume of which may be alternatively changed so as to alternatively exert a grip on said stuffed products inside the main body, thus allowing the stuffed products to be alternatively translated by said main body and freely moved with respect to said main body.

According to a further embodiment the present invention relates to a tying machine as claimed in claim 14 namely a tying machine comprising means adapted to control the tension of the string or cord.

Further embodiments of the tying machine according to the present invention are defined in the dependent claims.

Finally, the present invention relates to a system as claimed in claim 24 namely: Tying machine as claimed in one of claims 22-23, characterized in that said machine comprises a mechanism (3e) adapted to control the taking off of the casing (4) from the tube (3).

### BRIEF DESCRIPTION OF THE DRAWINGS

Further advantages, objects and features of the present invention will become more apparent with the following detailed description of some preferred embodiments when taken with reference to the accompanying drawings in which identical or corresponding parts are identified by the same reference numerals. In particular:
Figure 1 represents a schematic lateral view of a particular embodiment of the tying machine according to the present invention in combination with a stuffing machine adapted to deliver a tubular casing filled with a paste;
Figure 2 represents a schematic enlarged lateral view of a preferred embodiment of the tying machine according to the present invention;
Figure 3 represents a top view in partial section of the tying machine depicted in Figure 2;
Figures 3a and 3b relate respectively to a lateral view of restraining means and to a sectional view of the centrifugal means of the tying machine according to the present invention;
Figures 3c and 3d relate respectively to an enlarged view of the elastic body of the clamping or gripping means with which the tying machine according to the present invention may be equipped and to a sectional view of said clamping means;
Figures 4a and 4b relate to corresponding frontal views of the crimping jaws of the tying machine according to the present invention, with the jaws being depicted in their open and closed position, respectively;
Figure 5 represents a schematically enlarged view of the levers of the tying machine according to the present invention for actuating the crimping jaws;
Figure 6 represents an enlarged view of the tying means and the advancing means of the tying machine according to the present invention;
Figure 7 represents a lateral view of the tying machine of the present invention from the side of the stuffing machine;
Figures 8a and 8b represent respectively a lateral view and a top view of a detail of a further preferred embodiment of the tying machine according to the present invention;
Figures 9a and 9b represent respectively a lateral view and a sectional view of a detail of a further embodiment of the tying machine according to the present invention;
Figure 10 represents a schematic lateral view of a further embodiment of the tying machine according to the present invention in combination with a device adapted to be loaded with a predefined portion of a stuffed casing;
In Figure 11 there are schematically depicted some details of the embodiment of the tying machine according to the present invention depicted in Figure 10;
Figurer 12 represents a top view in partial section of the embodiment depicted in Figure 10;
Figures 12a and 12b represent respectively an enlarged and a cross sectional view of the clamping or gripping means of the device for substantially immobilizing the stuffed casing of the embodiment of the tying machine according to the present invention depicted in Figures 10 to 12;
In Figure 13 there is depicted a further embodiment of the tying machine according to the present invention.

### DETAILED DESCRIPTION OF THE PRESENT INVENTION

While the present invention is described with reference to the embodiments illustrated in the following detailed description as well as in the drawings, it should be understood that the following detailed description as well as the drawings are not intended to limit the present invention to the particular illustrative embodiments disclosed, but rather that the described illustrative embodiments merely exemplify various aspects of the present invention, the scope of which is defined by the appended claims.

In the following, some particular embodiments of the tying machine according to the present invention will be described to the drawings.

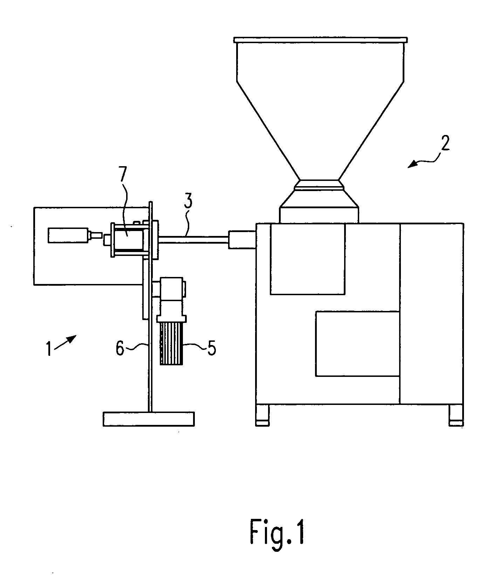

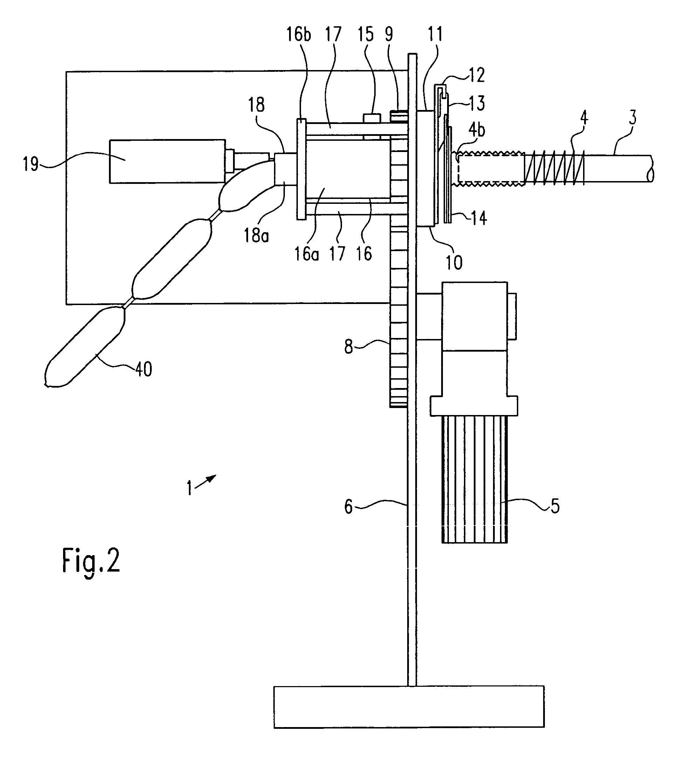

In Figures 1 and 2, the tying machine is identified by the reference numeral 1 and is depicted in combination with a stuffing machine 2. In particular, the tying machine 1 and the stuffing machine 2 are depicted in the reciprocal position in which they are disposed during the operations for preparing stuffed products.

The stuffing machine 2 is of the kind adapted to prepare and/or process a paste, for instance a paste containing meat. However, the tying machine according to the present invention may also be used in combination with a stuffing machine adapted to prepare and/or process a paste containing vegetables or other products, for instance in the case in which the preparation of stuffed food products containing soya or gluten is requested.

As depicted in Figures 1 and 2, the stuffing machine 2 comprises a stuffing or delivering horn or tube 3 adapted to deliver the paste prepared and/or processed within the stuffing machine. Alternatively, according to an embodiment to be described in the following, the delivering tube or horn may belong to the tying machine 1. A tubular casing 4, for instance a casing originating from animals is placed over the delivering tube 3 or fitted onto the delivering tube 3 like a sock. However, depending upon the kind of stuffed products to be prepared, a different casing may be used, for instance, a synthetic casing containing collagen, a rubber casing or any other suitable casing. During the operations for preparing the stuffed products, the paste processed within the stuffing machine 2 is delivered through the mouth 4b of the delivering tube 3 so as to be stuffed or introduced into the casing 4 previously placed over the fitting tube 3. As will become apparent from the following description, in the case of the tying machine depicted in Figures 1 and 2, namely in the case in which the delivering tube 3 belongs to the stuffing machine 2, the tying machine 1 is positioned with respect to the stuffing machine 2 in a position allowing the tying machine to receive or to be supplied with the tubular casing 4 filled with a paste or, in other words, in a position allowing the tying machine to be fed or supplied with the filled casing.

For reason of clarity, the direction along which the paste exits the stuffing machine through the delivering tube 3 (from right to left in Figures 1 and 2) will be referred to in the following as the feeding or supplying direction of the tying machine or, alternatively, as the advancing direction of the stuffed products and/or of the casing 4. The tying machine 1 is positioned with its inlet being placed in proximity of the exit mouth 4b of the delivering tube 3, or in other words in such a position allowing the paste exiting the stuffing machine 2 through the delivering tube 3 to fill or stuff the tubular casing 4 so that the filled casing is introduced or supplied into the tying machine 1. The tubular casing is therefore progressively removed or taken off from the fitting tube 3 and the operations are prosecuted until the whole casing has been stuffed and removed from the tube 3. Once the whole casing has been stuffed the operations are temporarily stopped and a new casing 4 is placed over or fitted onto the tube 3. To this end, the tying machine 1 and the stuffing machine 2 are moved away from each other so as to allow the user to place a new casing 4 over the tube 3. With a new casing 4 is placed over the tube 3 the tying machine 1 is moved again close to the stuffing machine 2 in the working position and the operation for preparing the stuffed products are started again.

The tying machine 1 comprises a support wall 6 adapted to receive the principal component parts of the tying machine. In particular, tying means 7 and driving means 5 , for instance a source of power like an electrical motor 5 adapted to actuate the tying means 7. It has however to be noted that any suitable different driving means or source of power may be provided to this end; for instance, an hydraulic motor or any other driving means may be used to this end along those known to the skilled person.

In the following, with reference to Figure 2, some further details of the tying machine according to the present invention will be described.

As anticipated above, the supporting wall is adapted to receive a source of power 5, for instance an electrical motor; in the particular embodiment depicted in Figure 2, the motor 5 is placed on the side of the vertical wall 6 facing the stuffing machine 2 (please note the delivering tube 3).

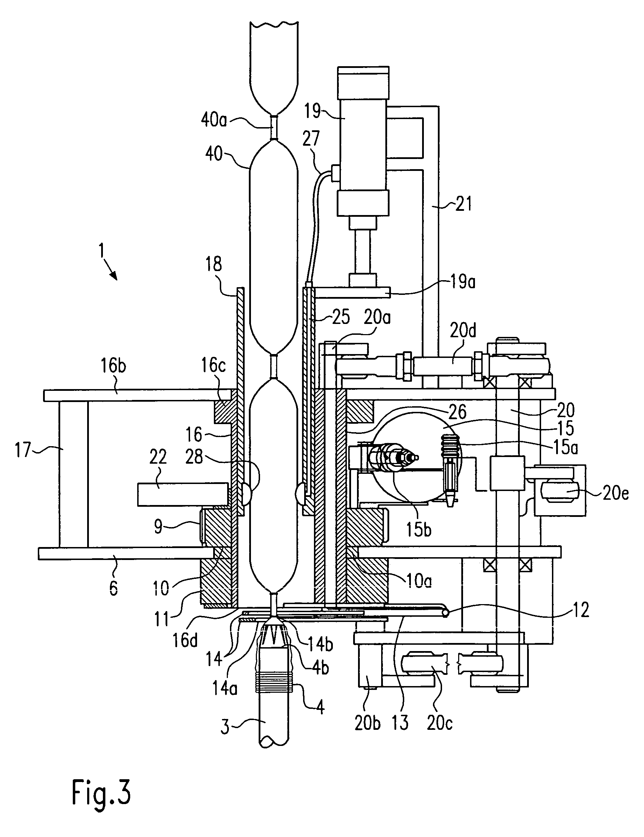

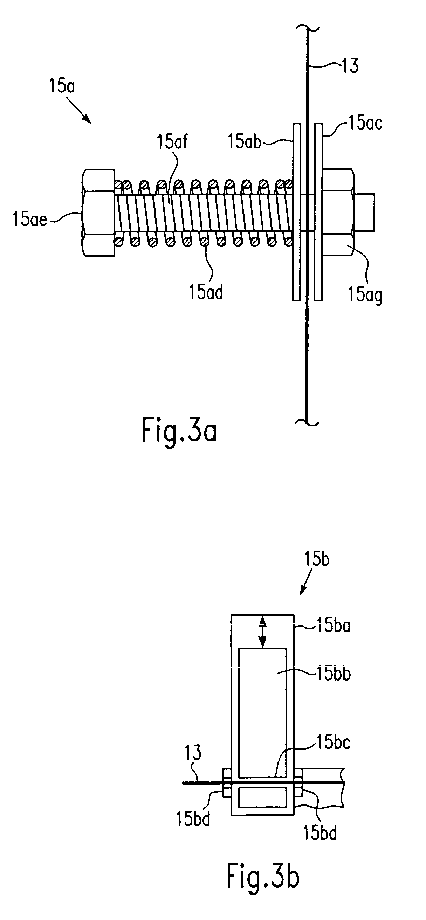

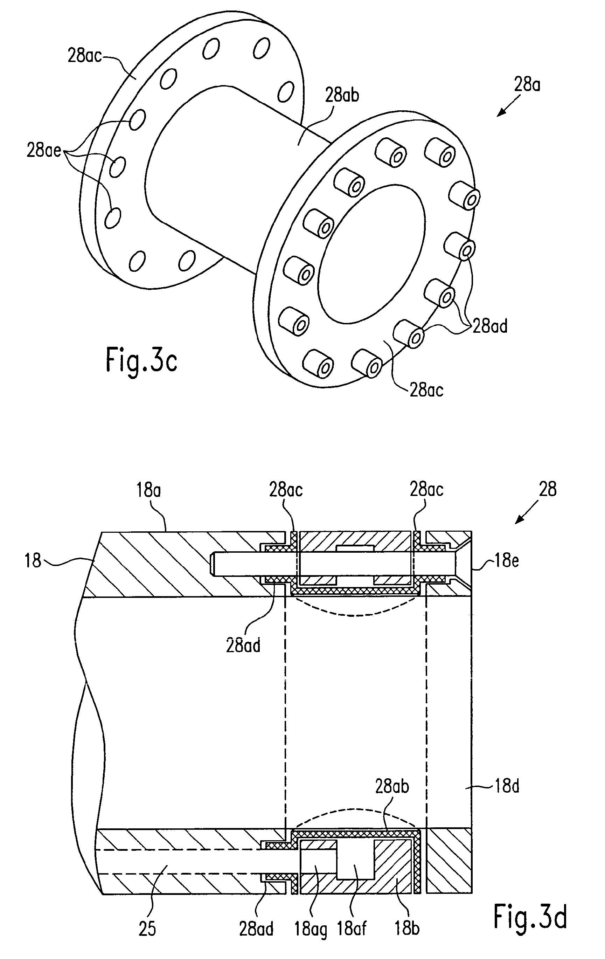

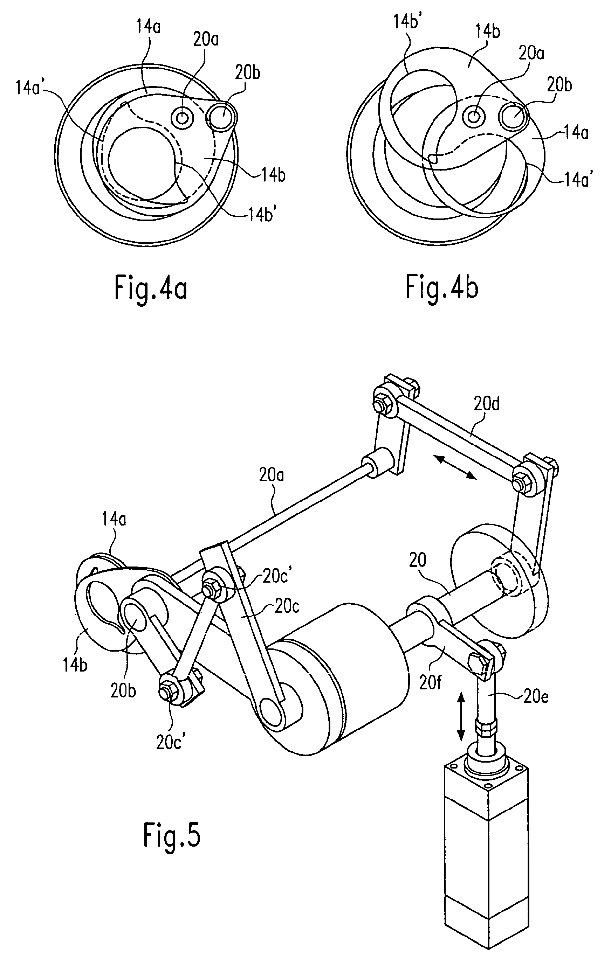

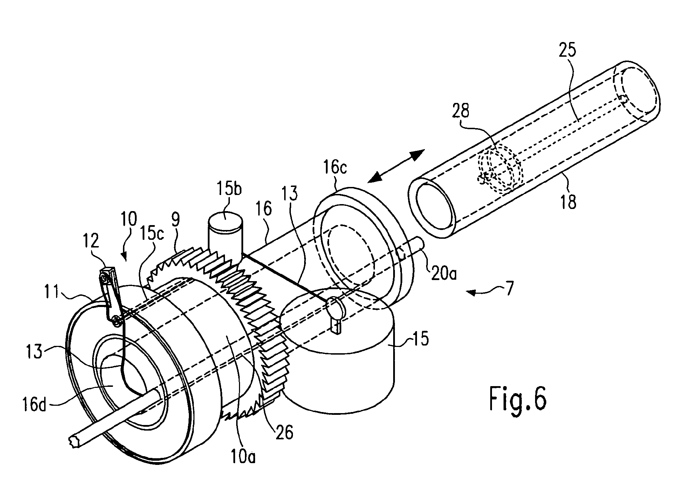

The electrical motor 5 is connected to a first gear wheel 8 by means of driving means (not depicted in Figure 1) adapted to this end. The gear wheel 8 is adapted to be rotated on its own central pinion (not depicted in Figure 1) with said pinion being received in a through hole (also not depicted in Figure 1) of the supporting wall 6. The gear wheel 8 is located on the side of the wall 6 opposite the side on which the motor 5 is placed and is adapted to engage a second gear whhel 9. The second gear wheel 9 belongs to rotatable means 10 which will be described in more detail in the following with reference to Figures 3 and 6 and which belong to the tying means 7. It appears therefore clear that, when the gear wheel 8 is rotated by the motor 5, the second gear wheel 9 is also rotated together with the rotatable means 10 and the tying means 7. It has however to be noted that different driving means other than the gear wheels 8 and 9 may be provided for the purpose of rotating the rotatable means 10; for instance, the gear wheels 8 and 9 may be substituted by a driving belt or any other means or device adapted to this end along those known to the skilled person. The rotatable means 10 comprise a flange 11, integral with or firmly fixed to the gear wheel 9. On this flange 11 there is provided a mechanism 12 adapted to drive or guide the string or cord 13 to a position in proximity of the inlet or supply area of the tying machine 1. Furthermore, in figure 2, there are schematically depicted two jaws 14; said jaws 14. (which will be described in more detail in the following with reference to Figures 4a, 4b and 5) are adapted to crimp or squeeze the tubular casing 4 filled or stuffed with a paste before the stuffed casing enters or is advanced into the tying machine 1. It has to be noted that the string 13 is guided by the guiding mechanism 12 between the jaws 14. The string 13 or a predefined quantity or a portion of it is contained or received in a container 15 adapted to this end and integral with or firmly fixed to the rotatable means 10. In particular, the container 15 is firmly fixed to the gear wheel 9 (see also Figures 3 and 6). It will therefore be clear to those skilled in the art that the rotation given or transmitted by the motor 5 to the gear wheel 8 allows the tying means 7 to be rotated accordingly, with said tying means 7 comprising the rotatable means 10 (namely the gear wheel 9 and the flange 11 integral with the gear wheel 9). In the same way, when the rotatable means 10 are rotated, also the container 15 and the guiding mechanism 12 are rotated. It is therefore apparent that, due to the rotation transmitted by the motor 5 to the gear wheel 8 and, accordingly, to the gear wheel 9, a predefined portion of string or cord is wound on the filled casing 4 in a position between the jaws 1 4 and in correspondence of the crimp formed by the jaws 14 so that a tie is formed.

As will become more apparent from the description relating to Figure 3, the rotatable means 10 are received in a second cylindrical through hole (not depicted in Figure 2) formed in the vertical wall 6; in this way, the rotatable means 10 may be rotated on their longitudinal axis substantially corresponding or running parallel to the longitudinal axis of the delivering tube 3. In particular, the rotatable means 10, comprising essentially the gear wheel 9 and the flange 11 firmly fixed to said gear wheel 9, are adapted to be rotated on a body 16 (in the following also referred to as secondary body) having an external cylindrical surface 16a. It will moreover become apparent from the following description relating to Figure 3 that the secondary body 16 is firmly fixed to the vertical wall 6 so as to avoid that the secondary body 16 may be rotated during rotation of the rotatable means 10.

A main body 18 is received within the secondary body 16 in such a way that the main body 18 may be reciprocated within the secondary body 16. The main body 18 may be reciprocated in a direction substantially parallel to the feeding or supplying direction of the tying machine; in particular, the main body 18 may be reciprocated by means of actuating means 19, for instance, by means of pneumatic actuating means adequately connected to the main body 18. Alternatively, the main body 18 may be reciprocated within the secondary body 16 by means of different actuating means, for instance, by means of an electrical motor connected to a gear or by means of any other system adapted to this end along those known to the skilled person.

As will become more apparent from the following description, the main body 18 is adapted to pull or trail the stuffed products 40 during its reciprocating motion in the feeding direction of the tying machine so as to forward or advance the stuffed products 40 in the feeding direction of the tying machine (from right to left in Figure 2).

In the following, further details of a preferred embodiment of the tying m achine according to the present invention will be described with reference to Figure 3. In Figure 3, those parts of the tying machine already described with reference to Figures 1 and 2 are identified by the same reference numerals.

As depicted in Figure 3, the tying machine 1 is positioned with respect to the delivering tube 3 in a position suitable for allowing the jaws 14 to crimp or squeeze the stuffed casing 4 filled with the paste delivered by the delivering tube 3. In particular, the pair of jaws 14 is placed in correspondence and/or in proximity of the exiting mouth 4b of the delivering tube 3, in a position between the exiting mouth 4b of the delivering tube 3 and the inlet or supply aperture 16b of the secondary body 16 facing the delivering tube 3. The expression inlet or supply aperture of the secondary body 16 has to be understood so as to mean the aperture of the secondary body 16 placed upstream in the feeding or supplying direction of the tying machine. Moreover, the jaws 14 are substantially aligned with both the mouth 4b of the tube 3 and said inlet aperture 16d of the secondary body 16. In this way, as will become more apparent in the following from the detailed description of the jaws, the tubular casing is entered into the tying machine 1 through apertures provided in each of the jaws 14.

From Figure 3 it is possible to better understand the reciprocal position of the different component parts of the tying machine.

For instance, it appears clearly from Figure 3 that the rotatable means 10 comprising essentially the gear wheel 9 and the flange 11 firmly fixed to the gear wheel 9 are received in a through aperture of the vertical wall 6. In particular, to this end, the gear 9 is firmly fixed to the flange 11 by means of a connecting portion 10a, with the said connecting portion 10a having an external diameter which is smaller or less than the external diameter of the gear 9 and of the flange 11 (see also figure 6). The external surface of the connecting portion 10a is adapted to engage the internal surface of the through aperture of the vertical wall 6 in which the rotatable means 10 are received; in this way, the rotatable means 10 may be rotated inside the through aperture of the vertical wall 6.

The container 15 containing a predefined portion or quantity of string or cord 13 is fixed to the gear wheel 9 of the rotatable means 10 so that the container 15 is rotated during rotation of the rotatable means 10. Means are also provided for the purpose of controlling the tension of the string 13 exiting the container 15; said means comprises substantially braking or retaining means 15a firmly fixed to the cover of the container 15 as well as centrifugal means 15b firmly fixed to the flange 11. Said retaining or braking means 15a will be described in the following together with said centrifugal means 15b with reference to Figures 3a and 3b.

As schematically depicted in Figure 3a, the retaining means 15a comprise essentially a main threaded pin or bolt 15af, with a nut 15ae engaged or screwed on one end of the bolt and a nut 15ag engaged or screwed on the opposite end of the bolt 15af. Moreover, a coil spring 15ad and a pair of washers 15ab and 15ac are placed over the bolt 15af; the string 13 is forced to go through the washers 15ab and 15ac. It appears therefore clearly that the spring 15ad exerts a pressure on the washer 15ab or, in other words, the washer 15ab is pushed by the coil 15ad toward the washer 15ac. The washer 15ab exerts therefore a pressure on the string 13 between the washers 15ab and 15ac, or, in other words, the string is compressed between the two washers 15ab and 15ac. The pressure exerted on the string 13 avoids that the string, during the tying operation, may freely slide between the two washers so as to freely exit the container 15. On the contrary, the pressure exerted on the string 13 allows to adequately regulate the tension of the string exiting the container, depending on the circumstances and/or exigencies. In particular, the tension of the string is regulated by adequately acting on the nut 15ae so as to decrease or increase the pressure exerted by the string 15ad on the washer 15ab.

The centrifugal means 15b (figure 3b) comprise substantially a hollow container 15ba by of a substantially cylindrical shape in which a body 15bb is received; in particular, the body 15bb may freely reciprocate within the container 15ba in the direction of the arrow in Figure 3b. The container 15ba comprises through apertures 15bd provided in the bottom portion of the container for the purpose of allowing the string 13 to enter and exit the container, respectively. The body 15bb comprises a through aperture or a through conduit 15bc. The string 13 enters the centrifugal means 15b through the inlet aperture 15bd of the container 15ba, proceeds through the through conduit 15bc of the body 15bb, and exits the centrifugal means 15b through the outlet aperture 15bd of the container 15ba. In the rest position depicted in Figure 3b (this position is assumed when the rotatable means 10 are not rotated) the body 15bb lies on the bottom of the container 15ba so that the through conduit 15bc of the body 15bb is substantially aligned with the apparatus 15bd of the container 15ba. In this way, no pressure or friction is exerted on the string 13, but the string 13 may slide freely through the centrifugal means 15b. On the contrary, during the tying operations, namely when the rotatable means 10 are rotated, the centrifugal force exerted on the body 15bb pushes the body 15bb within the container 15ba toward the cover of the container 15ba (at the top in Figure 3b). In this way, the through conduit 15bc is no longer aligned with the apertures 15bd. It therefore clearly appears that the string 13 may no longer slide freely through the centrifugal means 15b, but is guided along a curved path due to the misalignment of the conduit 15bc with respect to the apparatus 15bd. In this way, a friction is exerted on the string 13 so that the string is maintained under tension.

Still with reference to Figure 3, it clearly appears that the string 13 exiting the container 15 is further guided until it comes into proximity of the inlet or supply area of the tying machine 1. In particular, this of obtained by means of further guiding means 15c which will be described in more detail in the following with reference to Figure 6. At the position in proximity to the inlet area of the tying machine 1, the string is captured by a mechanism 1 2, firmly fixed to the flange 11 of the rotatable means 10 so as to be guided until it reaches the space between the jaws 14. It therefore clearly appears that when the rotatable means 10 are rotated, the container 15 is rotated as well, so that the string exiting said container 15, adequately guided by the guiding means 15c and by the mechanism 12, is wound on the tubular casing 4 exiting the delivering tube 3 in a position between the jaws 14. Moreover, the retaining or braking means 15a and centrifugal means 15b allow that the string be adequately tensioned during rotation of the rotatable means, so that the string may be firmly wound on the tubular casing so as to realize a predefined number of windings which are reliable and which will last long during the time.

From Figure 3, it clearly appears that a counterweight 22 is firmly fixed to the gear wheel 9; the purpose of said counterweight 22 is that of counterbalancing the unbalance due to the container during rotation of the rotating means 10.

It also appears from Figure 3, that the rotatable means 10 are adapted to receive the end portion of the secondary body 16 placed upstream in the feeding or supplying direction of the tying machine 1. To this end, the secondary body 16 (or at least its upstream portion in the feeding direction) is provided with an external cylindrical surface 16a (see Figure 2) substantially adapted to engage the internal cylindrical surface of the rotatable means 10. In this way, the rotatable means 10 may freely rotate on the secondary body 16. On the contrary, the secondary body 16 may not be rotated. In fact, the downstream end portion of the secondary body 16 in the feeding direction of the tying machine or, in other words, the end portion of the secondary body 16 opposed to the end portion received in the rotatable means 10, is provided with a flange 16c adapted to be engaged with a plate 16b, so that the secondary body 16 is firmly fixed to said plate 16b (for instance, by means of screws not depicted in the figures or, alternatively by means of other fixing means such as welding or the like, well known to those skilled in the art). Moreover, the plate 16b is firmly fixed to the vertical wall 6 by means of rigid bars 17 (see also Figure 2). It therefore results that the secondary body 16 is firmly fixed to the vertical wall 6, thus avoiding that the secondary body 16 may be rotated during rotation of the rotatable means 10.

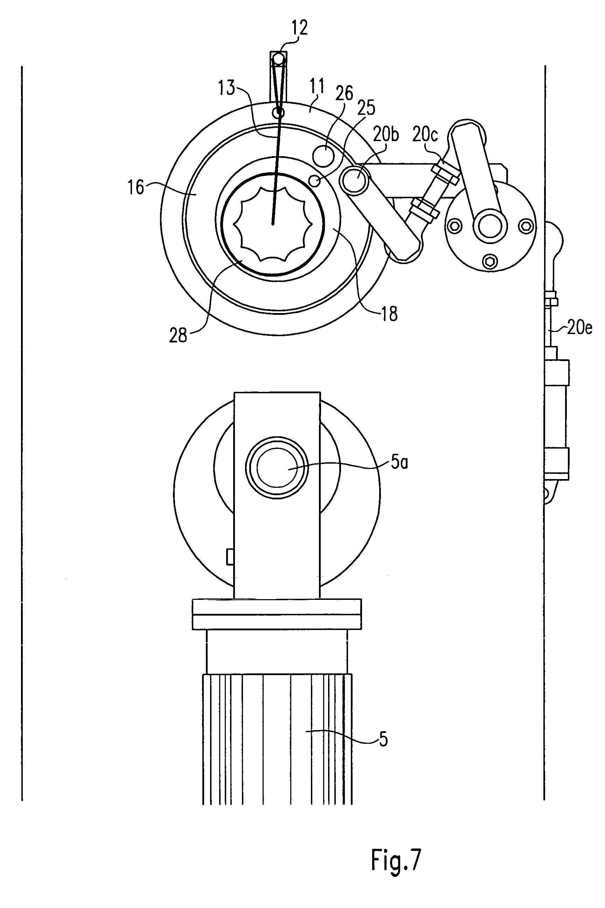

As depicted in Figure 3, and as will be further clarified in the following with reference to Figures 6 and 7) a main body 18 is received inside the secondary body 16 in such a way that the main body 18 may be reciprocated inside the secondary body 16. To this end, the main body 18 is provided with an external surface adapted to engage the internal surface of the secondary body 16. In the embodiments depicted in the figures, the secondary body 16 and the main body 18 have an internal surface and an external surface that are substantially cylindrical; it should, however, be noted that the secondary body 16 and the main body 18 may be realized so as to have an internal surface and an external surface, respectively, of a different shape. For instance, the main body 18 and the secondary body 16 may be realized with an internal surface and an external surface, respectively, having a cross section with a square or hexagonal perimeter or the like.

The main body 18 is adapted to be reciprocated inside the secondary body 16 by means of actuating means 19, for instance, by means of pneumatic actuating means 19. However, other actuating means may be provided to this end, such as, for example, mechanical or hydraulic actuating means. The actuating means 19 are connected to the end portion of the main body 18 placed downstream in the feding direction of the tying machine by means of connecting means 19a. In a similar way, the actuating means 19 are firmly fixed to the plate 16b by means of supporting means 21, for instance by means of metallic plates or the like. The supporting means 21 are realized in such a way so as to position the actuating means 19 in a position adapted to allow the actuating means to translate and/or reciprocate the main body 18 within the secondary body 16.

As anticipated above in the disclosure with reference to Figure 2, the main body 18 is adapted to trail or pull the stuffed products 40 during its reciprocating motion in the feeding direction of the tying machine 1. To this end, the main body 18 is equipped with internal gripping or clamping means 28, adapted to exert a grip on the stuffed product 40 inside the main body 18 so as to trail or pull the stuffed products 40 while the main body 18 is translated in the feding direction of the tying machine 1. In particular, when the main body 18 is displaced in the direction of feeding of the tying machine 1 (from the bottom to the top in Figure 3), the gripping means are actuated so as to exert a grip on the stuffed products 40 inside the main body 18. Accordingly, the stuffed products 40 are trailed or pulled by the main body 18 during its translating motion; on the contrary, when the main body 18 is displaced back in the direction contrary to the feeding direction of the tying machine 1 (from the top to the bottom in figure 3), the gripping or clamping means 28 are not actuated so that no grip is exerted by the gripping means 28 on the stuffed products 40 inside the main body. In this way, the main body 18 may be freely moved with respect to the stuffed products 40 so as to reach a predefined position within the secondary body 16.

According to a preferred embodiment, the gripping or clamping means 28 essentially comprise a body of rubber material, such as, for example, gum, resin, silicon or the like, adapted to be alternatively inflated and deflated with air or gas or to be filled or emptied with a liquid. The increase in volume of the rubber body arising either from the inflation of air or gas or from the introduction of liquid into the rubber body results in a light pressure being exerted on the stuffed products 40 inside the main body by the rubber body so that a light grip is exerted on the stuffed products. In this way, the stuffed products are trailed or pulled by the main body 18 when the main body is displaced in the feeding direction of the tying machine 1. On the contrary, when liquid or air or gas are removed from inside the rubber body, the volume of the rubber body decreases and no grip is exerted any longer on the stuffed products 40 inside the main body 18, but the stuffed products are free from any pressure or grip. In this way, the main body 18 may be displaced back in a direction contrary to the feeding direction of the tying machine, without trailing or pulling the stuffed products 40. Accordingly, a trailing system for trailing the stuffed products 40 is obtained, according to which the stuffed products are alternatively trailed or pulled in little steps in the direction of feeding of the tying machine (from the bottom to the top in figure 3).

As will become more apparent in the following, the distance covered by the main body 18 during a translation step in the feeding direction of the tying machine corresponds to the length of the elongated crimped portions 40a formed between two adjacent or consecutive links or singular stuffed products 40. The length of the translation steps may be selected by means of adequate electronic control means (not depicted in the figures). It results, therefore, that elongated crimped portions of different lengths may be formed, depending on the circumstances so as to meet the wishes of the consumers.

The air or gas or liquid is introduced into the gripping means 28 (and removed from the same) by means of a conduit 25 which is in turn connected to a vacuum device by means of a flexible tube or pipe 27. This vacuum device or, alternatively, any other means adapted for producing compressed air or gas may be realized in combination with the pneumatic actuating means 19. The conduit 25 is formed in the wall of the main body 18. To this end, the wall of the main body 18 has a non-constant thickness (see also figure 7) so that the conduit 25 may be realized or formed in the portion of the wall having a higher thickness (the portion of the wall on the right side of figure 3).

In the following, a preferred embodiment of the gripping or clamping means 28 will be described with reference to figures 3c and 3d.

As anticipated above, the gripping means 28 comprise a body 28a of a rubber material. In particular, as schematically depicted in figure 3c, said body 28a comprises a main portion 28ab having a substantially cylindrical shape; two disc-shaped flanges 28ac extend from the opposite sides of the main portion 28ab so as to give the rubber body 28a the shape of a tubeless tire or, in other words, a toroidal shape. Several hollow cylindrical bodies 28ad, normally nine cylindrical hollow bodies, extend from both flanges 28ac; said cylindrical hollow bodies 28ad are placed in correspondence of corresponding through holes 28ae formed on both flanges 28ac so that the inside of the cylindrical hollow bodies 28ad is brought into communication with said through holes 28ae; as will become apparent in the following, the cylindrical hollow bodies 28ad and the through holes 28ae are provided for the purpose of allowing the rubber body 28a to be received within the main, reciprocating body 18 and also for the purpose of allowing liquid or gas to be introduced into and removed from the gripping or clamping means 28.

In particular, as schematically depicted in figure 3d, the flanges 28ac of the rubber main body 28a are received inside the wall of the displaceable main body 18. To this end, the main body comprises a first and a second portion 18a and 18d, with a ring 18b being inserted between said first and second portions 18a and 18d; one of the flanges of the rubber body 28a is inserted between the first portion 18a of the main body 18 and the ring 18b; the other flange 28ac of the rubber body 28a is inserted between the ring 18b and the second portion 18d of the main body 18. The several component parts or portions of the main body 18, that is the first portion 18a, the ring 18b and the second portion 18d are kept in the reciprocal position depicted in figure 3d by means of screws 18e, so that the main body 18 is adapted to receive the rubber body 28a. in particular, said screws 18e are received into corresponding through holes provided in the second portion 18d, in the ring 18b of the main body 18 and in the cylindrical hollow bodies 28ad of the rubber body 28a; moreover, the screws 18e engage corresponding threaded holes provided in the first portion 18a of the main body 18. Normally, eight screws 18e are used, with said screws 18e being received into corresponding apertures of the first and second portion of the main body and of the ring 18b; the eight screws are also received within corresponding eight hollow cylindrical bodies 28ad of the rubber body 28a. One of the nine hollow cylindrical bodies 28ad of the rubber body 28a is brought into communication with the conduit 25 formed in the wall of the main displaceable body 18 for introducing or removing the liquid or gas into and from the rubber body 28a. In particular, it appears clearly from figure 3d that a groove 18af is formed in the internal surface of the ring 18b of the main body 18, with said groove 18af communicating with a hollow cylindrical conduit 18ag and with a hollow cylindrical body 28ad which, in turn, communicates with the conduit 25. The space defined by the groove 18af and the cylindrical portion 28ab of the rubber body 28a is adapted to receive the liquid or gas introduced through the conduit 25. The liquid or gas introduced into said space pushes the cylindrical portion 28ab of the rubber body 28a towards the inside of the main, displaceable body 18 as indicated by the dashed line in figure 3d so that the rubber body 28a exerts a pressure, and therefore a grip, on the stuffed products inside the main displaceable body 18. For the purpose of speeding up the operations, the conduit 25 may be connected to a vacuum device so that the liquid or gas may be introduced into and removed from the gripping means 28 more quickly.

Again with reference to figure 3, it appears clearly that the tying machine according to the present invention is equipped with a pair of jaws 14 placed in correspondence of the inlet of the tying machine or, in other words in correspondence of the inlet aperture or supply aperture 16d of the secondary body 16, substantially in a position facing the delivering tube 3 of the stuffing machine. The pair of jaws 14 is provided for the purpose of crimping or squeezing the stuffed tubular casing. Whilst a detailed description of the jaws will be given in the following with reference to figures 4a and 4b, it has to be noted at this point of the disclosure that the jaws 14 are actuated by a pair of bars 20a and 20b, respectively, adapted to be rotated on their own longitudinal axis. In particular, the jaw 14b disposed upstream in the direction of feeding of the tying machine is firmly connected to a first bar 20b, adapted to be rotated on its own axis. In the same way, the jaw 14a placed downstream in the direction of feeding of the tying machine is firmly connected to a second bar 20a, which is also adapted to be rotated on its own axis. It appears clearly from figure 3 that the rotatable bar 20a is received in a seat or housing 26 formed in the wall of the secondary body 16. To this end, in the same way as in the case of the main body 18, the wall of the secondary body 16 has a non-constant thickness so that the seat or housing 26 for the rotatable bar 20a may be formed in the portion of the wall of the secondary body 16 having the higher thickness (the right portion in figure 3).

The rotatable bar 20a is rotated by means of a lever 20d; the rotatable bar 20b is rotated by means of several levers 20c. The lever 20d and the levers 20c are actuated by a third rotatable bar 20 adapted to be rotated by actuating means 20e, for instance by pneumatic actuating means but also by electric of mechanic actuating means or the like. The third rotatable bar 20 is positioned between the vertical wall 6 and the plate 16d.

In the following, the function of the pair of jaws 14 will be described with reference to figures 4a, 4b and 5.

As depicted in detail in figures 4a and 4b, the jaws 14a and 14b comprise essentially two metal plates firmly fixed to the rotatable bars 20a and 20b, respectively. Moreover, both plates of the jaws 14a and 14b comprise an aperture 14a' and 14b', respectively. Said apertures have substantially the shape of an eye or a drop, that is with an enlarged portion and a small portion communicating with each other. The jaw 14a is adapted to be rotated in a counter clockwise direction by means of the rotatable bar 20a; to the contrary, the jaw 14b is adapted to be rotated in a clockwise direction by means of the rotatable bar 20b. In particular, the jaws 14a and 14b may be rotated between two predefined positions. In the position depicted in figure 4a, (in the following also referred to as open position) the enlarged portions of the apertures 14a' and 14b' of the jaws 14a and 14b, respectively, are substantially aligned; in this way, the tubular casing exiting the tube 3 may be pushed through the apertures 14a' and 14b' of the jaws 14a and 14b, respectively. To the contrary, in the position depicted in figure 4b (in the following also referred to as closed position), the small portions of the apertures 14a and 14b are aligned. In this way, when the jaws 14 are rotated from the open position to the closed position, the tubular casing 4 is squeezed or crimped by the jaws 14a and 14b.

The rotation of the jaws 14a and 14b, respectively in a counter clockwise and clockwise direction, is obtained as follows.

As schematically depicted in figure 5, the actuator 20e is connected to the rotatable bar 20 by means of a connecting bar 20f. In particular, the actuator 20e comprises a bar or a piston adapted to be reciprocated it the vertical direction. It will be, therefore, apparent to a person skilled in the art that when the piston is actuated from the bottom to the top, the rotatable bar 20 is rotated counter clockwise; to the contrary, when the piston 20e is actuated from the top to the bottom, the rotatable bar 20 is rotated clockwise. When the rotatable bar 20 is rotated counter clockwise, the lever 20d is displaced from right to left in figure 5; in this way, the bar 20a is also rotated counter clockwise together with the jaw 14a. Simultaneously, the levers 20c, which do not comprise a singular lever but a system of three levers connected by two articulations 20c', are closed so that the rotating bar 20b is rotated together with the jaw 14b in a clockwise direction. To the contrary, when the actuator 20e is actuated from the top to the bottom, the rotatable bar 20 is rotated in a clockwise direction. Accordingly, the rotatable bar 20a and the jaw 14a are also rotated in a clockwise direction whilst the rotatable bar 20b and the jaw 14b are rotated in a counter clockwise direction.

In the following, some further details of the tying means 7 of the tying machine according to the present invention will be described with reference to figures 6. In figure 6, those parts already described with reference to other figures are identified by the same reference numerals.

As schematically depicted in figure 6, the main, displaceable body 18, equipped with gripping means 28 and with a conduit 25 formed in its wall, is adapted to be received within the secondary body 16. In turn, the portion of the secondary body 16 placed upstream in the feeding direction of the tying machine (the left portion in figure 6) is received within the rotatable means 10. Said rotatable means 10, comprise the gear wheel 9, the flange 11 and the connecting portion 10a and are adapted to be rotated on the secondary body 16. Moreover, it appears more clearly from figure 6 that the connecting portion 10a has a diameter which is smaller than the diameter of the gear wheel 9 and the flange 11. As already explained with reference to figure 3, the external surface of the connecting portion 10a is adapted to be engaged with the internal surface of a through aperture formed in the vertical wall of the tying machine 1. Moreover, as anticipated above, when the rotatable means 10 are rotated, the container 15 fixed to the gear wheel 9 is also simultaneously rotated, so that a string or cord exiting the container 15 is wound on the casing in correspondence of the crimped portions previously formed. It is also to be noted that the guiding means for guiding the string 13 comprise, in addition to braking or retaining means 15a (not depicted in figure 6) and centrifugal means 15b, a through conduit 15c formed through the gear wheel 9, the connecting portion 10a and the flange 11. In this way, the string or cord 13 is guided from the container 15 to a position in proximity of the inlet aperture 16d of the secondary body 16, i.e. the aperture placed upstream in the feeding direction of the tying machine. At the exit of the conduit 15c, the string is captured by a mechanism 12 allowing the string 13 to be wound on the tubular casing when the rotatable means 10 are rotated. Since the string is adequately tensioned by the braking means 15a and the centrifugal means 15b, the string 13 may be strongly wound on the tubular casing. Accordingly, ties or knots are formed which are durable and reliable, thus avoiding the risk that the ties or knots become untied accidentally.

In figure 6, there is also depicted the rotatable bar 20a for rotating the jaw 14a; as apparent from figure 6, the bar 20a is received in a seat or housing 26 formed in the wall of the secondary body 16.

In the following, the reciprocal position of the principle component parts of the tying machine according to the present invention will be further clarified with reference to figure 7.

As schematically depicted in figure 7, a source of power 5, for instance an electric motor, is fixed to the vertical wall 6. Connecting means 5a connecting the source of power 5 to the gear wheel 8 (not depicted in figure 7) are received in a hole (also not depicted in figure 7) formed in the vertical wall 6. The gear 8 is placed on the opposite side of the vertical wall with respect to the source of power 5.

It appears, moreover, clear from figure 7 that the secondary body 16 is received within the rotatable means 10 (only the flange 11 of the rotatable means 10 is depicted in figure 7). In the same way, it appears clear from figure 7 that the main body 18 is received within the secondary body 16. The inflatable gripping or clamping means 28 are received within the main body 18, with the conduit 25 being formed in the wall of the main body 18 for the purpose of allowing air, gas or liquid to be introduced into or removed from the gripping or clamping means 28. In figure 7, there is also depicted the seat or housing 26 adapted to receive the rotatable bar 20a for rotating the jaw 14a (neither the bar 20a nor the jaw 14a are depicted in figure 7). Finally, in figure 7, there are depicted the actuating means 20e for rotating the bar 20, i.e. for actuating the levers and bars connected to the jaws 14a and 14b; also depicted in figure 7 are the bar 20b and the levers 20c for rotating the jaw 14b.

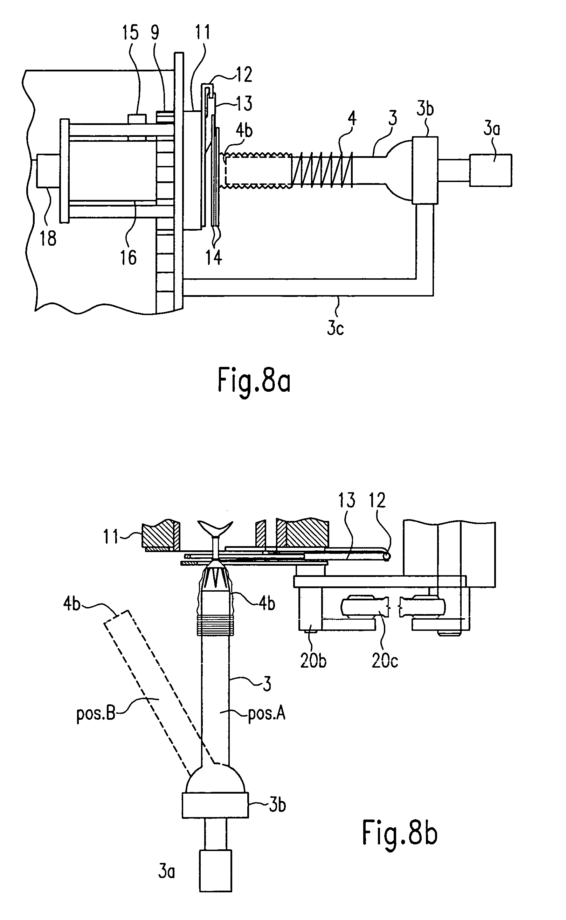

In the following, a preferred embodiment of the tying machine according to the present invention will be described with reference to figures 8a and 8b.

According to the embodiment schematically depicted in figures 8a and 8b, the delivering tube 3 for emitting the paste processed inside the stuffing machine does not belong to the stuffing machine (as in the case of the embodiment described with reference to figure 1 to 3) but belongs to the tying machine 1. To this end, as depicted in figure 8a, the feeding tube 3 is fixed to the vertical wall 6 of the tying machine 1 by means of supporting means 3c. Moreover, the delivering tube 3 is adapted to be connected to the stuffing machine 2. To this end, the tube 3 comprises connecting means 3a allowing the feeding tube 3 to be connected to the stuffing machine 2. For instance, a threaded sleeve 3a may be provided to this end, with said threaded sleeve 3a being adapted to be connected to a tube (not depicted in the figures) for instance a delivering tube of the stuffing machine 2. According to the embodiment depicted in figures 8a and 8b, an articulation 3b is provided on the tube 3, allowing the end portion 4b of the tube 3 to be displaced between a first working position (position A of figure 8b) and a second standby position (position B depicted in dashed line in figure 8b). In the working position, the end portion 4b of the tube 3 is disposed in the proximity of the inlet of the tying machine 1. During the tying operations, the feeding tube is kept in the working position A of figure 8b, so that the paste exiting the tube 3 fills the casing 4 placed over the delivering tube 3 and pushes the filled casing into the tying machine 1. The tubular casing is then continuously removed from the tube 3 and the preparation of the stuffed products prosecute until the whole casing has been used. Once the casing 4 is finished, the operations are temporarily stopped and a new casing 4 is placed over the tube 3. To this end, the feeding tube 3 is displaced acting on the articulation 3b into the standby position B of figure 8b and the new casing 4 is placed over the tube 3. Once a new casing has been placed over the tube 3, the tube 3 is displaced back acting on the articulation 3b into the working position A of figure 8b so that the end portion 4b of the tube 3 is placed again in proximity of the inlet of the tying machine 1 and the preparation of stuffed products can be started again. The embodiment described above has the advantage that there is no need to move the tying machine and the stuffing machine away from each other for the purpose of placing a new casing over the feeding tube. On the contrary, the stuffing machine and the tying machine are kept connected to each other by means of the connecting means 3a and it is possible to place a new casing over the feeding tube 3, simply by displacing the tube. This solution allows the working time to be further reduced.

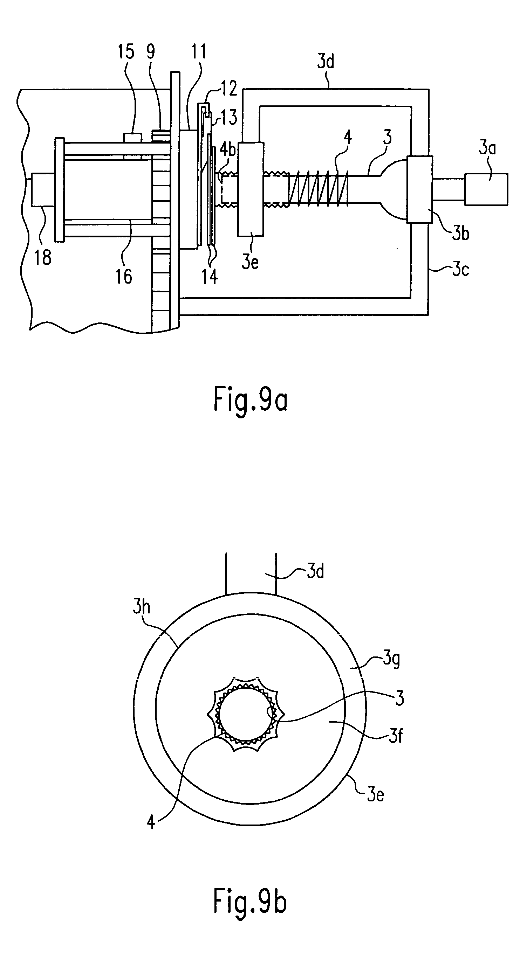

In the following, with reference to figures 9a and 9b, a further preferred embodiment of the tying machine according to the present invention will be described.

In the embodiment schematically depicted in figures 9a and 9b, control and/or braking means 3e are provided for the purpose of controlling and/or driving the removal or taking off of the tubular casing 4 from the feeding tube 3. Said control means 3e are firmly fixed to the articulation 3b of the tube 3 by means of fixing means 3d and are positioned in proximity to the end portion or exit mouth 4b of the tube 3. In particular, as depicted in figure 9b, said control means comprises a main body 3g with a through aperture 3h adapted to receive the feeding tube 3 with the casing 4 placed over the tube. Gripping or clamping means 3f are provided inside the aperture 3h, with said gripping or clamping means 3f being adapted to exert alternatively a pressure on the casing 4 placed over the tube 3. For example, said gripping means 3f may comprise an element of rubber material such as gum, resin, silicon or equivalent materials and may be substantially similar to the gripping means 28 described with reference to figures 3, 3c and 3d. In particular, the gripping or clamping means 3f may be adapted to be alternatively inflated or deflated with air or gas; alternatively, the gripping means 3f may be adapted to be alternatively filled with and emptied from a liquid. To this end, the gripping or clamping means 3f are connected to a conduit (not depicted in the figures) with a vacuum system (also not depicted it the figures). When gas or liquid is introduced into the gripping means 3f, the volume of said gripping means 3f increases and a controlled pressure is exerted on the casing 4 placed over the tube 3 so that the removal of the casing from the tube may be adequately controlled. Controlling means (not depicted in the figures) may also be provided for driving the operation of the gripping means so as to synchronize the action of the gripping means with the other operations of the tying machine.

The embodiment described above has the advantage that the casing may be better filled or stuffed with the paste; in particular, the embodiment described above avoids that air may remain trapped inside the casing, thus avoiding the formation of air-pockets or bubbles which could compromise or reduce the quality of the stuffed products. On the contrary, the embodiment described above allows the preparation of stuffed products, characterized by a casing without wrinkles, creases or the like.

In the following, with reference to figure 3, the operations will be described of the tying machine according to the particular embodiment of the present invention described above with reference to figures 1 to 9.

As anticipated above, a tubular casing 4 is placed like a sock over the feeding tube 3; said feeding or delivering tube may either belong to a stuffing machine adapted to process a meat paste or, alternatively, to the tying machine, and is adapted to deliver said paste through an exit mouth 4d.

The paste exiting the feeding tube 3 fills the casing 4 so that the filled or stuffed casing is pushed forward into a direction substantially parallel to the direction along which the paste is delivered by the tube 3 (the feeding or supplying direction of the tying machine).

The filled or stuffed casing is pushed into the tying machine 1, in particular, into the main body 18 through the jaws 14a and 14b which have been previously brought into their open position, namely with the enlarged portions of the apertures 14a' and 14b' aligned as depicted in figure 4a. During a first step, once a first predefined portion of the casing has been filled and pushed into the tying machine (in the main body 18), the jaws 14a and 14b are closed, i.e. the jaws are rotated into the closed position of figure 4b, so as to bring the small portions of the apertures 14a' and 14b' into alignment. In this way, the casing 4 is squeezed or crimped by the jaws. Subsequently, the tying means a re actuated, i.e. the rotatable means 10 are rotated a predefined number of times so that a predefined number of windings of the string 13 is wound on the casing 4 in correspondence of the crimped portion. In this way, a first tie or knot is formed. As will become more apparent in the following, said first tie is realized in correspondence of the end portion of the elongated crimped portion to be formed, placed downstream in the feeding direction of the tying machine. Subsequently, the gripping means 28 are actuated (the rubber body 28a is inflated or filled through the conduit 25) so that a grip is exerted on the stuffed product 40 inside the main body 18. Substantially simultaneously, the main body 18 is translated or displaced along the feeding direction of the tying machine by means of the actuating means 19, with the body 18 trailing or pulling during its motion the stuffed products 40 gripped by the gripping means 28. During pulling of the stuffed products 40 due to the translation of the main body 18a long the feeding direction of the tying machine, the jaws 14a and 14b are kept in their closed position schematically depicted in figure 4b. In this way, a predefined portion of the casing 4 is forced to go through the closed jaws 14. The length of said predefined portion substantially corresponds to the distance covered by main body 18 during its translating motion in the feeding direction of the machine. Accordingly, an elongated crimped portion 40a is formed, of a length substantially corresponding to the distance covered by the main body d uring its translating motion.

The rotatable means 10 are then rotated again a predefined number of times so that the string 13 is again wound a predefined number of times around the crimped casing; in this way, a second tie or knot is formed in correspondence of the end portion of the elongated crimped portion placed upstream in the feeding direction of the tying machine.

Once the second tie has been formed, the jaws 14 and 14b are opened and the gripping means 28 are deactivated so as to leave the stuffed products 40 free of any grip. In particular, to this end, air, gas or liquid previously introduced within the gripping means 28 is removed through he conduit 25 so that the rubber body 28a of the gripping means 28 is deflated or emptied and its volume decreases.

With the gripping means 28 having been deactivated, the main body 18 is displaced back by means of the actuating means 19 along a direction contrary to the feeding direction of the tying machine. A second portion of casing 4 is then filled or stuffed and pushed into the main body 18 through the open jaws 14a and 14b and the operations are prosecuted by closing the jaws and forming a new tie. Once a first crimp has been formed, the operations are prosecuted according to the sequence described above.

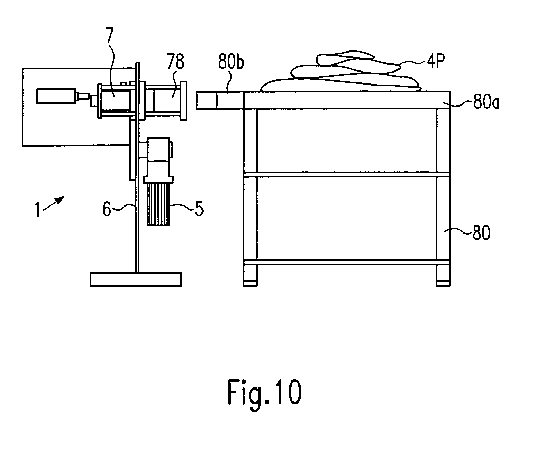

In the following, with reference to figures 10, 11, 12, 12a and 12b, a further embodiment of the tying machine according to the present invention will be described; in figures 10 to 12b, those parts of the tying machine already described with reference to other figures are identified by the same reference numerals.

The tying machine to be described in the following has revealed to be particularly useful in those situations in which a casing must be tied, which has been previously filled or stuffed; for this reason in figures 10, 11, 12, 2a and 12b, the tying machine 1 is depicted in combination with a device 80 adapted to receive or to be loaded with a predefined portion or quantity of a stuffed casing, i.e. of a casing previously filled or stuffed. Still for this reason, in figures 10, 11, 12, 12a and 12b, the stuffed casing is identified by the preference numeral 4p, so as to distinguish it from the casing 4 filled or stuffed with the stuffing machine 2 described above.

The device 80 comprises essentially a table equipped with a loading or support plane 80a on which the stuffed casing 4p may be placed and/or loaded; in turn, the loading plane 80a comprises a guiding portion 80b, for instance having the shape of a triangle and adapted to guide the stuffed casing 4b towards the tying machine 1.

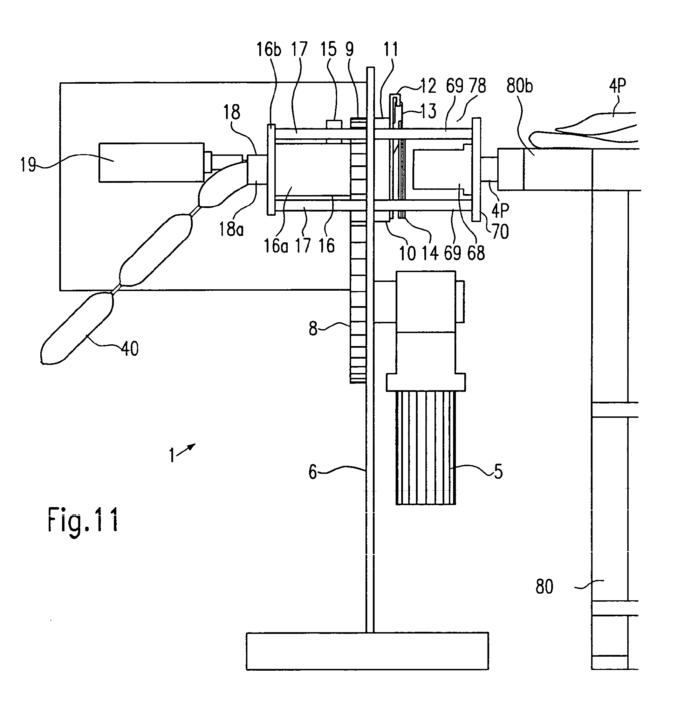

The tying machine depicted in figures 10 and 11 is substantially similar to the tying machine described above but differs from the tying machine previously described in that the machine of figures 10 and 11 additionally comprises a device 78 provided for the purpose of allowing the stuffed casing 4p to be adequately immobilized or at least kept in a substantially resting condition during the tying operations; in this way, it is avoided that the stuffed casing 4p may rotate during the tying operations, due to the rotation of the tying means. Moreover, the risk is also avoided or minimized, that the portion of string or cord between the two ties at the end portions of each stuffed product be wound on the stuffed products; accordingly, the risk is avoided that the stuffed products may get damaged or even broken by the string. Moreover, the stuffed products may be adequately filled and have a consistence and a compactness in conformity with the wishes of the producers of stuffed products.

As it will become more apparent in the following, the device 78 comprises a hollow body adapted to receive the filled casing 4p previously loaded on the plane 80a of the device 80, so that the filled casing 4p may be advanced through said hollow body. The filled casing 4p entering into the device 78 is then downloaded through the hollow body and conveyed inside the tying machine 1 in the same way as in the case of the casing emitted by the stuffing machine 2 previously described; it will therefore be apparent to those skilled in the art that in the case of the embodiment depicted in figures 10 to 12, namely in the case of a tying machine adapted to operate in combination with a device previously loaded with a predefined portion of filled casing 4p, the filled or stuffed casing 4p is first advanced through the device 78 and subsequently through the tying machine 1, solely by means of the advancing means of the tying machine 1, namely the advancing means described above; that is to say, that the filled casing 4p is not advanced as a result of the paste exiting the stuffing machine.

It has, however, to be noted that according to the exigencies, also the tying machine depicted in figures 10 to 12 may be used in combination with a stuffing machine of the kind described above in the same way as in the case of the tying machine described above with reference to figures 1 to 9; in this case, the tying machine and the stuffing machine are reciprocally placed in a position in which the device 78 is placed in correspondence of the delivering tube of the stuffing machine, that is in a position allowing the casing stuffed by the stuffing machine to be introduced into the device 78.

On the contrary, in the case depicted in figures 10 to 12, the tying machine is positioned with respect to the device 80, in a position in which the device 78 is placed in correspondence and in proximity of the guiding portion 80b of the loading plane 80a; from the following description, it will become apparent that the filled casing 4p previously loaded on the device 80 is downloaded from the device 80 by means of the advancing means of the tying machine. In particular, as a result of the reciprocal position of the tying machine and the device 80, the filled casing 4p is introduced into the device 78 and subsequently, forced to go through the jaws of the tying machine and through the tying means. However, a detailed description of the operation of the tying machine depicted in figures 10 to 11 will be given in the following.

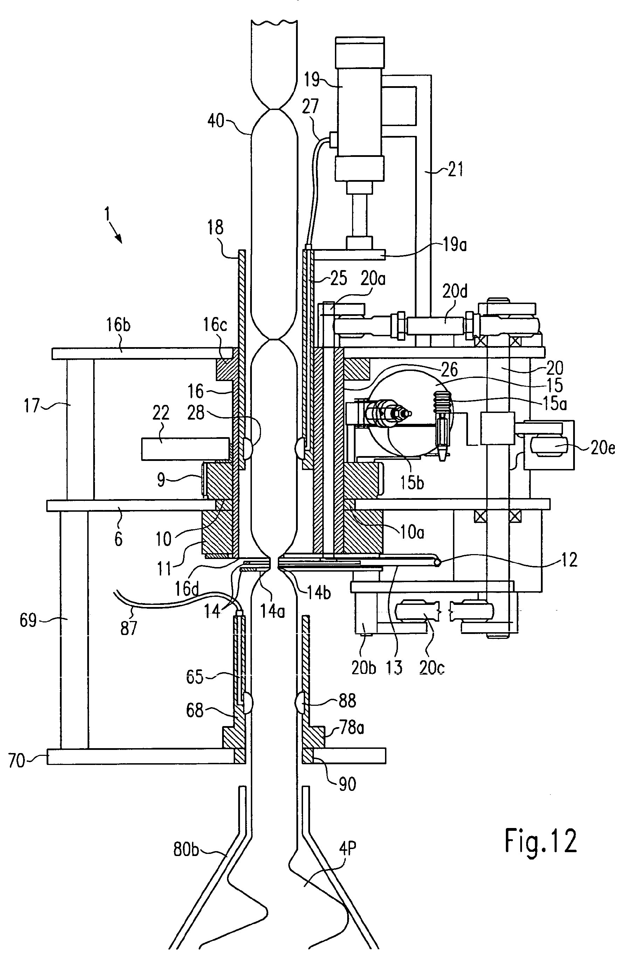

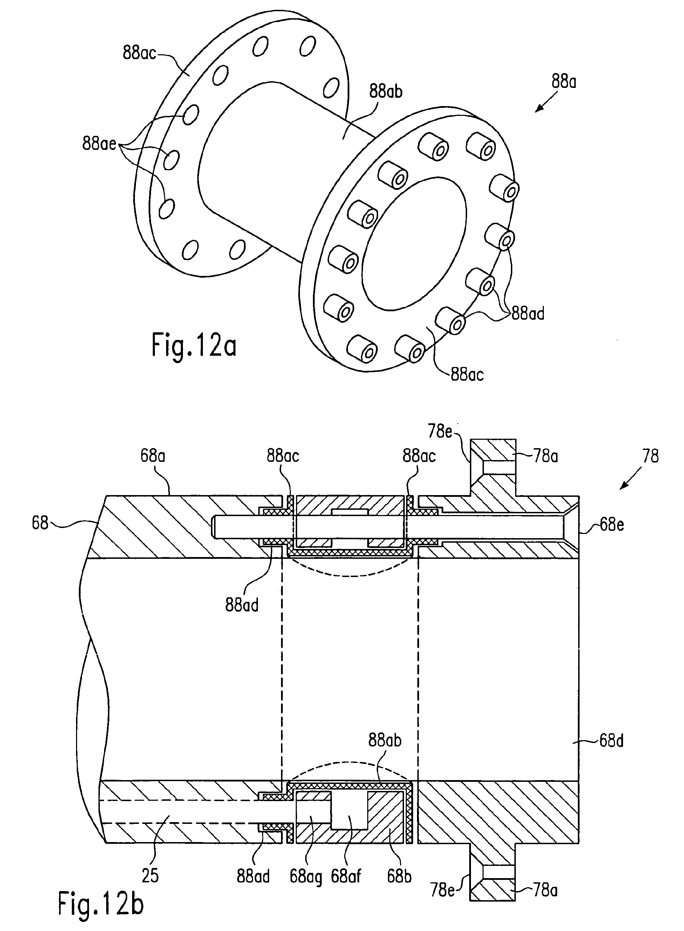

In figure 11, there are schematically depicted some details of the device 78. It appears for instance from figure 11 that the device 78 comprises a hollow body 68 adapted to receive the filled casing 4p progressively downloaded from the loading device 80 through the guiding portion 80b (see also figure 12). The hollow body 68 is positioned upstream with respect to the jaws 14 and the tying means 7 in the advancing direction of the filled casing 40 and the stuffed products 40 (from right to left in figure 12) by means of a plate 70 (for instance a metal plate); in turn said metal plate 70 is fixed to the supporting wall 6 of the tying machine 1 by means of supporting means 69 (for instance metal bars). Said supporting means 69 may be fixed to the principle wall 6 by means of fixing means adapted to this end and known to those skilled in the art. For instance, to this end, screws may be used, adapted to engage corresponding seats provided into the plate 6 and in the supporting means 69. It will become more apparent from the following description that the hollow body 68 is positioned in such a way that its longitudinal axis substantially corresponds to the longitudinal axis of the main body 18 of the advancing means 18 for advancing the stuffed products 40. It has, however, to be noted that different reciprocal dispositions may be selected in which the longitudinal axis of the hollow body 68 is not aligned with the longitudinal axis of the main body 18; for instance, such a disposition may be preferred when stuffed products must be prepared with a curved shape.

Also the hollow body 68 may be fixed to the plate 70 in one of the several ways well known to those skilled in the art; for example, also for the purpose of fixing the hollow body 68 to the plate 70, screws may be used adapted to engage corresponding seats formed in both the supporting means 69 and the plate 70 (see also figures 12 and 12b).

In the following, with reference to figure 12, the device 78 and its function within the machine 1 will be described. In view of the function exploited, the device 78 will be referred to in the following as immobilizing device or device for keeping the filled casing in a substantially resting condition.

It appears clear from figure 12 that the hollow body 68 comprises an end portion adapted to engage a corresponding seat or aperture provided in the plate 70. Said end portion correspond to the end portion of the hollow body 68 positioned upstream in the advancing direction of the filled casing 4p and of the stuffed products 40 (from top to the bottom in figure 12). Said end portion has, therefore, an external surface adapted to engage the internal surface of the aperture 90 provided in the plate 70. Moreover, the hollow body 68 comprises a flange 78a firmly fixed to it and provided for the purpose of allowing the hollow body 68 to be fixed to the plate 70. It appears clear from figure 12b that the flange 78a comprises a plurality of through holes (only two of which are depicted in figure 12b) adapted to receive corresponding screws 78e; in turn, said screws 78e are adapted to engage corresponding treated apertures (not depicted in the figure), provided in the plate 70. Moreover, it has to be noted that although in figure 12 the hollow body 68 has been depicted as having a substantially cylindrical shape, different shapes may be selected; for instance, a hollow body may be provided having a cross section with a square or an hexagonal perimeter or the like. In this case, the aperture 90 of the plate 70 has an internal surface of a corresponding shape, that is to say with a square, hexagonal perimeter or the like.

It appears, moreover, from Figure 12 that also inside the hollow body 68 gripping or clamping means 88 are provided, adapted to exert a grip on the filled casing 40, so as to allow the filled casing 40 to be immobilized during the tying operation, in particular, when the filled casing is clamped or squeezed. It will become apparent from the following description that the gripping or clamping means 88 are substantially similar to the griping or clamping means 28 provided inside the main body 18. During the operations, in particular, when the ties are formed on the filled casing by means of the jaws 14, the clamping or gripping means 88 are actuated so as to exert a grip on the filled casing 40 inside the hollow body 68; it arises therefore, that the filled casing 40 is firmly held by the gripping means 78 and, therefore, substantially immobilized so as to avoid that the filled casing may be rotated on its longitudinal axis. It has, however, to be noted that the function of the gripping means 68 is synchronized with that of the advancing means and in particular with that of the gripping means 28 provided inside the main body 18. In fact, the gripping means 88 are not actuated when the stuffed products 40 are pulled by the main body 18 during its translation motions as a result of the grip exerted by the gripping means 28. On the contrary, when the main body is displaced back along a direction substantially contrary to the feeding direction of the tying machine 1 (from top to bottom in Figure 3), and the gripping means 28 are, therefore, not actuated so that no grip is exerted on the stuffed products 40 inside the main body, the gripping means 78 are actuated again so as to immobilize the stuffed casing 4b inside the hollow body 68.

According to a further embodiment, also the gripping means 88 comprise essentially a body of a rubber material, such as, for example, gum, resin, silicon or the like, adapted to be alternatively inflated or deflated or filled with and emptied from a liquid. The increasing volume of the rubber body, due to the introduction of air, gas or liquid inside it, results in the rubber body exerting a light pressure on the filled casing inside the hollow body so as to immobilize the filled casing, thus avoiding that the filled casing may be rotated. On the contrary, when air or liquid is removed from the rubber body and its volume decreases, correspondingly, no pressure or grip is any longer exerted on the filled casing 4p so that the filled casing 4p may be pulled or trailed by the advancing means of the tying machine along the feeding direction of the tying machine (from bottom to top in Figure 12). A system is, therefore, realized by means of which the filled casing 40 may be alternatively immobilized inside the hollow body 68 and left free to be displaced inside the hollow body. As it will become more apparent in the following, the embodiment depicted in Figures 10 to 12 is usually preferred and used for the production of chains of stuffed products, wherein two adjacent or consecutive stuffed products are separated by "simple" or short crimped portions of the kind depicted in Figure 12, i.e. crimped portions which are not elongated as the crimped portions described above with reference to Figures 1 to 9. It is, however, to be noted that the function of the immobilizing device 78 and the gripping means 88 may be synchronized with that of the advancing means and the gripping means 28 so as to allow chains of stuffed products to be prepared, wherein two consecutive or adjacent stuffed products 40 are separated by elongated portions 40a. In fact, the length of the advancing steps of the stuffed products or the filled casings along the feeding direction of the tying machine may be selected by means of adequate electronic control systems (not depicted in the Figure) so that the stuffing and/or tying operation may be carried out so as to allow the preparation of stuffed products with elongated crimped portions. It arises, therefore, that crimped portions of different lengths may be realized as well as "simple" or not elongated crimped portion, depending on the circumstances and so as to accomplish the exigencies of the consumers.

The air or gas or liquid are introduced inside the gripping means 88 or removed from them by means of the conduit 65 which is in turn connected to the source of gas or liquid by means of a flexible tube or pipe 87. For example, in the case of compressed air or gas, the source of gas or air may be realized in combination with the pneumatic actuator 19. The conduit 65 is provided and/or formed in the wall of the hollow body 68. To this end, the wall of the hollow body 68 may have a non-constant thickness so as to allow the conduit 65 to be provided or formed in the portion or wall having the higher thickness.

In the following, with reference to Figures 12a and 12b, a particular embodiment of the gripping means 88 will be described. As anticipated above, the gripping means 88 are substantially similar to the gripping means 88 provided inside the main body 18; it arises, therefore, that the description of the gripping means 88 substantially corresponds to that relating to the gripping means 28. Nevertheless, a description of the gripping means 88 will be given in the following for reasons of clarity.

The gripping means 88 comprises a body 88a of a rubber material; in particular, as depicted in Figure 12a, said body 88a comprises a main portion 88ab of a substantially cylindrical shape; from the opposite end portions of the main portion 88ab, two corresponding flanges 88ac extend so as to confer to the body 88a the shape of a tubeless tire or, in other words, a toroidal shape. From both flanges 88ac, several hollow cylindrical bodies 88ad extend, normally nine hollow bodies, wherein said hollow bodies communicate with corresponding through apertures 88ae provided on both flanges; as it will become more apparent from the following description, the hollow cylindrical bodies 88ad and the through apertures 88ae are provided, on the one hand, for the purpose of allowing the rubber body 88a to be positioned inside the hollow body 68 and, on the other hand, for the purpose of allowing air or liquid to be introduced into or removed from the gripping means 88.

In particular, as schematically depicted in Figure 12b, the flanges 88ac of the rubber body 88a are received inside the wall of the hollow body 68; to this end, said hollow body 68 comprises a first and a second portion 68a and 68d as well as ring 68b positioned between said first and second portions 68a and 68d; one of the flanges of the rubber body 88a is inserted between the first portion 68a of the hollow body 68 and the ring 68b while the other flange is inserted between the ring 68b and the second portion 38d of the hollow body 68. The component parts of the hollow body 68, that is the first portion 68a, the ring 68b and the second portion 68d are kept or maintained in the reciprocal disposition schematically depicted in Figure 12b by means of screws 68e. in particular, said screws 68e are received in corresponding adequate screw holes provided in both the second portion 68d and the ring 68b of the hollow body 68; the screws are also received within the hollow, cylindrical bodies 88ad of the rubber body 88a and engage corresponding through holes provided in the first portion 68a of the hollow body 68. Normally, eight screws 68 are provided and received in corresponding seats or apertures of the first and second portions of the hollow body 68 and in corresponding hollow cylindrical bodies 88ad of the rubber body 88a. One of the nine hollow bodies 88ad of the rubber body 88 communicates with the conduit 65 provided in the wall of the hollow body 68 so as to allow air or liquid to be introduced into or removed from the rubber body 88a. In particular, as apparent from Figure 12b, a groove 68af is formed in the internal surface of the ring 68b, with said groove 68af communicating with a through hole 68ag which, in turn, communicates with a corresponding hollow cylindrical body 88ad and with a conduit 65. The hollow space formed by the groove 68af and the cylindrical portion 88ab of the rubber body 88a is adapted to receive the liquid or gas introduced through the conduit 65; when liquid or gas is introduced into said hollow space, the cylindrical portion 88ab of the rubber body 88 is pushed toward the inside of the hollow body 68 so that the rubber body 88a exerts a pressure on the filled casing 4p inside the hollow body 68. Also in this case, for the purpose of speeding up the operations, the conduit 65 may be connected to a vacuum device so that the liquid or gas previously introduced into the gripping means 88 may be removed more quickly.

The operations of the tying machine schematically depicted in Figures 12 and 11 may be summarized as follows.

At the beginning of the operations, the tying machine 1 and the loading device 80 (or alternatively the stuffing machine 2) are brought one close to each other and disposed in the close reciprocal position schematically depicted in Figure 10 (or, alternatively, in figure 1, in the case that the tying machine is used in combination with a stuffing machine). Subsequently, the jaws 14a and 14b are brought in the open position, that is with the enlarged portions of the corresponding apertures 14a' and 14b' being aligned as depicted in Figure 4a; the gripping means 88 and 28 of the immobilizing device 78 and the advancing means, correspondingly, are then deactivated (the rubber body 88a and the rubber body 28a are deflated or emptied) and the advancing means are brought into their advanced position, that is the upstream end portion of the main body 18 is brought into correspondence of the upstream end portion of the secondary body 16. A portion of filled casing 40 is subsequently introduced (for instance by the operator) into the immobilizing device 78, through the jaws 14 and into the main body 18. During a first step, both the gripping means of the immobilizing device 78 and the gripping means 28 of the advancing means are actuated (both the rubber body 88a and the rubber body 28a are inflated or filled) so that a grip is exerted on the filled casing 4p so as to immobilize the filled casing inside the hollow body 68 and the main body 18. Substantially contemporarily or at least within a time immediately subsequent to the actuation of the gripping means 88 and 28, the jaws 14 and 14b are closed, that is the jaws are rotated until their apertures 14a' and 14b' are brought into the position depicted in Figure 4b. In this way, the filled casing is gripped or squeezed by the jaws. Subsequently, the tying means 7 are actuated, that is the rotatable means 10 are rotated a predefined number of times so that a string or cord 13 is wound on the crimped portion a predefined number of times so that a first tie is formed. Subsequently, the gripping means 88 are deactivated (the rubber body 88a is deflated or emptied) so as to release the filled casing 40 inside the hollow body 68 and the jaws 14a and 14b are brought into their open position. The main body 18 is then displaced forward, that is the main body 18 is reciprocated by means of the actuating means 19 a long a d irection substantially corresponding to the feeding direction of the tying machine so that the stuffed products 40 are pulled or trailed into the same direction by means of the gripping means 28. It arises, therefore, clearly that pulling or trailing the stuffed products 40 into the feeding direction of the tying machine results in the filled casing 4p inside the hollow body 68 to be pulled or trailed into the same direction so that a portion of filled casing 4p is downloaded or removed from the loading plate 80a of the loading device 80. It arises also clearly that the distance along which the advancing means are translated during this first step corresponds substantially to the length of the stuffed products to be prepared.

At this point, the gripping means 28 are deactivated (the air or gas or liquid inside the gripping means 28 is removed through the conduit 25 so that the gripping means are deflated or emptied) whilst the gripping means 88 are activated again so as to immobilize once again the filled casing 4p inside the hollow body 68 of the device 78. With the gripping means 28 being deactivated, the main body 18 is reciprocated by means of the actuating means 19 along a direction contrary to the feeding direction of the tying machine until the main body 18 reaches its advanced, upstream position. The gripping means 28 are then activated once again and the tying operation may be prosecuted as described above. The sequence of operations described above relates to the preparation of chains of stuffed products, wherein two adjacent or consecutive stuffed products (sausages or the like) are separated by "simple" crimped portions, i.e. crimped portions which are not elongated. This sequence of operation may, however, be modified and adapted to the preparation of chains of stuffed products, wherein two adjacent or consecutive stuffed products are separated by elongated crimped portions. In particular, the function of the gripping means 88 may be synchronized with the function of the gripping means 28 as well as with the function of the advancing and/or pulling means, so that elongated crimped portions may be formed, substantially similar to those described with reference to Figures 1 to 9. For instance, an intermediate step may be carried out, during which the jaws are kept in their closed position and the gripping means 88 are deactivated but the gripping means 28 together with the advancing means are activated, so that the stuffed products are advanced along a distance substantially corresponding to the length of the elongated crimped portions to be realized.

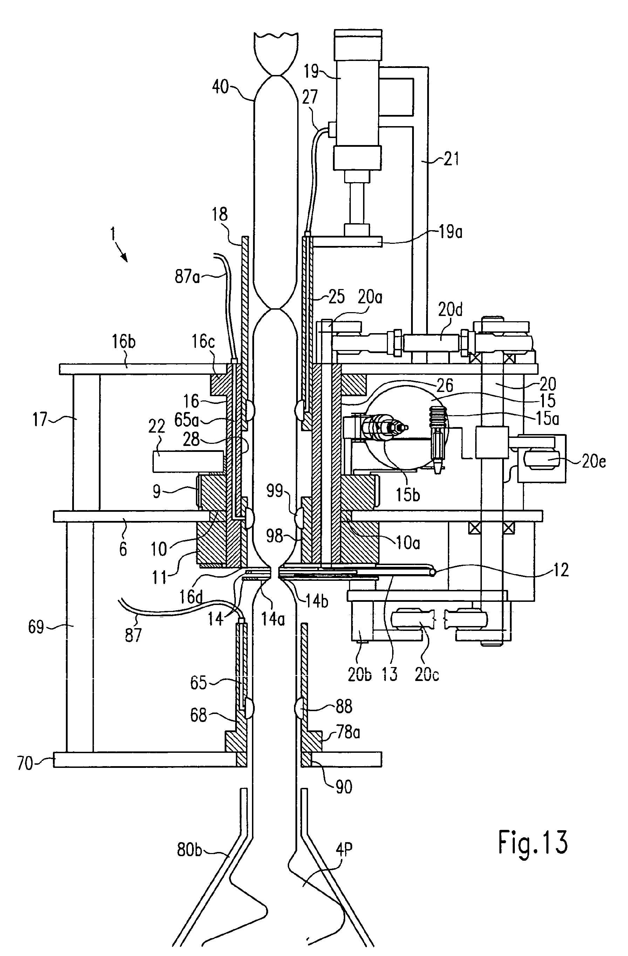

In the following, with reference to Figure 13, a further embodiment of the tying machine according to the present invention will be described; in Figure 13, those parts already described with reference to other Figures are identified by the same reference numerals.

The machine depicted in Figure 13 is substantially similar to the tying machine described with reference to Figures 10 to 12b but comprises the additional features that a second immobilizing device is provided, adapted to immobilize the filled casing 4p; in particular, in Figure 13, said second immobilizing device is identified by the reference numeral 98.

Moreover, in the embodiment schematically depicted in Figure 13, the second immobilizing device 98 is recieved inside the secondary body 16. It will, however, be clear to those skilled in the art that, depending on the circumstances, the second immobilizing device 98 may be provided in different positions than that depicted in Figure 13; for instance, embodiments may be realized, wherein the second immobilizing device 98 is provided outside the secondary body 16, for instance in a position upstream with respect to the secondary body 16, in the feeding direction of the tying machine 1. In this case, also the jaws 14, will be adequately positioned, for instance at a distance from the secondary body 16, allowing the second immobilizing device 98 to be positioned outside the secondary body 16, between the jaws and the body 16.

The purpose of the second immobilizing device 98 is that of guaranteeing that the filled casing 4p be not rotated or moved during the tying operations; the combined action of the two immobilizing devices 98, 78 allows in fact that the filled casing be substantially immobilized or kept in a resting condition during the tying operation. In particular, this is obtained by means of the reciprocal disposition of the two immobilizing devices 98, 78 depicted in Fig. 13, namely wherein the first device 78 is positioned upstream with respect to the jaws 14 in the feeding direction of the tying machine while the second device is positioned downstream with respect to the jaws 14 in the same feeding direction of the tying machine 1. In fact, as it will become apparent from the following description of the operation of the tying machine according to the present embodiment, neither the portion of filled casing 4p upstream with respect to the jaws, nor the portion of filled casing downstream with respect to the jaws 14 may be rotated or moved during the tying operations.

It appears clear from Fig. 13 that also the second immobilizing device 98 is equipped with gripping means 99, allowing to exert a grip on the filled casing 4p so as to allow the filled casing 4p to be immobilized during both the clamping operations and the tying operations. Moreover, from the following description, it will become apparent that the gripping means 99 are substantially similar to the gripping means 28 provided within the main body 18 and to the gripping means of the first immobilizing device 78. During operations, in particular during the realization of the ties on the casing 4p previously crimped by the jaws 14, the gripping or clamping means 99 are actuated (eventually simultaneously to the gripping means 88 of the first immobilizing device 78) so as to exert a grip on the filled casing 4p inside the secondary body 16. It arises therefore that the filled casing 4p is firmly kept or held by the gripping means 99 and thus substantially immobilized, so that the filled casing may not be rotated on its longitudinal axis. It has however to be noted that the action of the gripping means 99 may be synchronized with that of the gripping means 88 of the immobilizing device 78, as well as with that of the advancing means, in particular with that of the gripping means 28 provided inside the main body 18. In fact, also the gripping means 99 are not actuated when the stuffed products 40 are pulled or trailed by the main body 18 during its translating first motion due to the grip exerted on the stuffed products by the gripping means 28. On the contrary, when the main body 18 is reciprocated back, ie. along a direction contrary to the feeding direction of the tying machine 1 (from top to bottom in Fig. 3) and the gripping means 28 are therefore not actuated but no grip is exerted on the stuffed products 40 inside the main body, the gripping means 99 (and eventually also the gripping means 88) are actuated again so as to immobilize the filled casing 4b inside the secondary body 16 and the hollow body 68.

According to a preferred embodiment, also the gripping means 99 comprise essentially a body of an elastic material such as, for example, gum, resin, silicon or the like, substantially similar to the rubber body depicted in Figs. 3c and 12a, namely a rubber body adapted to be alternatively inflated and deflated and filled and emptied with a liquid. Also in this case, the increasing volume of the rubber body due to the introduction of a compressed gas or liquid inside it, results in the rubber body exerting a light pressure, ie. a light grip on the filled casing 4p inside the hollow body so as to immobilize the filled casing, thus avoiding that the filled casing may be rotated. On the contrary, removing the gas or liquid from the rubber body and its corresponding decrease in volume, results in the filled casing 4p being rendered free from any grip or pressure, thus allowing that the filled casing 4p may be pulled or trailed by means of the advancing means along the feeding direction of the tying machine (from top to bottom in Fig. 12).

A system is therefore realized, by means of which, the filled casing may be alternatively immobilized and left free to be translated, due to the combined action of the two immobilizing devices 78, 98. As it will become apparent in the following, also the embodiment depicted in Fig. 13 is usually preferred and used for the preparation of chains of stuffed products, wherein two consecutive stuffed products (sausages or the like) are separated by "simple" not elongated crimped portions. It has however to be noted that also in this case, the function of the two immobilizing devices 78, 98 may be synchronized with that of the advancing means and the gripping means 28 so as to allow the preparation of chains of stuffed products, wherein two consecutive or adjacent stuffed products are separated by elongated crimped portions 40a. It is therefore possible to realize crimped portions of different lengths as well as simple crimped portions, depending on the exigencies and so as to accomplish or meet the wishes of the consumers.

The air or gas or liquid is introduced inside the gripping means 98 or removed from them through a conduit 65a which is in turn connected to an adequate source of gas or liquid by means of a flexible tube or pipe 87a (see Fig. 13). For instance, in the case of compressed air or gas, the source of gas or air may be realized in combination with the pneumatic actuator 19. The conduit 65a is realized in the wall of the secondary body 16. Also in the case of the embodiment depicted in Fig. 13, the flexible tube or pipe 87a may be connected to a vacuum device so that the liquid or gas may be introduced into and removed from the gripping means 99 more quickly.

The operation of the tying machine depicted in Fig. 13 may be summarized as follows.

Once the tying machine 1 and the loading device 18 or the stuffing machine 2 have been adequately positioned (see Figs. 10 and 1, respectively), the jaws 14a, 14b are opened, that is the enlarged portions of their apertures 1 4a', 14b' are aligned as schematically depicted in Fig. 4a; moreover the gripping means 99, 88 of the immobilizing devices 98, 78 as well as the gripping means 28 of the advancing means are deactivated (the corresponding rubber bodies are deflated or emptied) and the advancing means are brought into the advanced position, that is with the upstream end portion of the main body 18 being positioned in proximity of the immobilizing device 98. A portion of filled casing 4p is then introduced (for instance by hand by the operator) inside the immobilizing device 78 and, in turn, through the jaws 14 and inside the secondary body 16 and the main body 18. During a first step, the gripping means 88 of the device 78, together with the gripping means 99 of the device 98 and the gripping means 28 of the advancing means are actuated (the corresponding rubber bodies are inflated or filled) so as to immobilize the filled casing 4p. Substantially simultaneously or within a time immediately subsequent to the actuation of the gripping means 88, 99, 28, the jaws 14a, 14b are closed, that is the jaws are rotated until the small portions of their apertures 14a', 14b' are aligned as depicted in Fig. 4b. In this way, the casing is crimped or squeezed by the jaws. Subsequently the tying means 7 are actuated, that is the rotatable means 10 are rotated a predefined number of times so that a portion of string or cord is wound on the filled casing 4p a predefined number of times in correspondence with the crimped portion so that a first tie is realized. Subsequently, the gripping means 99, 98 are deactivated so as to release the filled casing 4p and the jaws 14a, 14b are brought again into their open position. The main body 18 is then reciprocated, i.e. translated along the feeding direction of the tying machine by means of the actuating means 19 so that the stuffed products 40 are pulled into the same direction due to the grip exerted on them by the gripping means 28.

The gripping means 28 are then deactivated (air or gas or liquid inside the gripping means 28 are removed through the conduit 25 so that the gripping means 28 are deflated or emptied) while the gripping means 78, 98 are activated once again to immobilize once again the filled casing 4b. With the gripping means 28 being deactivated, the main body 18 is reciprocated back by means of the actuating means 19 along a direction contrary to the feeding direction of the tying machine until the main body 18 reaches its advanced position. The gripping means 28 are then actuated once again and the operations may be prosecuted as described above.

Also the sequence of operations described above relates to the preparation of stuffed products, wherein the stuffed products in the chain are separated by a "simple" crimped portion, i.e. by not elongated crimped portions, this sequence of operation may however be modified and adapted to the preparation of chains of stuffed products, wherein two adjacent or consecutive products are separated by elongated crimped portions. In particular, the function of the gripping means 88, 99 may be synchronized with that of the gripping means 28 as well as with that of the advancing means so that elongated crimped portions may be realized, similar to those described with reference to Figs. 1 to 9; for instance, an intermediate step may be carried out during which the jaws are kept in their closed position and the gripping means 88, 99 are deactivated but the gripping means 28 and the advancing means are actuated so as to advance the stuffed products along a distance substantially corresponding to the length of the crimped portions to be realized.

Of course, other embodiments of the tying machine according to the present invention may be provided, in addition to those described above; for instance, embodiments may be realized, wherein the advancing means described above are not provided. These embodiments may be for instance used in those circumstances in which the tying machine is used in combination with the stuffing machine; in fact, in this case, the filled casing and/or the stuffed products are advanced due to the paste exiting the stuffing machine.

Moreover, embodiments may be realized, equipped with two or more immobilizing devices.

It has therefore been verified that the tying machine according to the present invention allows to overcome the drawbacks affecting the prior arts machines. In fact, the tying machine according to the present invention allows to realize reliable ties, wherein the string or cord is adequately tensioned, thus conferring to the stuffed products a good consistence and compactness, as required by the consumers. Moreover, in the tying machine according to present invention, the stuffed products are automatically centered inside the machine due to the action of one or more immobilizing devices adapted to immobilize softly but strongly the stuffed products, thus avoiding that the stuffed products may be rotated when the string or cord is wound on them during the tying operations.

The machine according to the present invention allows also to confer to the stuffed products a predefined curved shape, particularly requested by the consumers; in particular a predefined curvature of the stuffed products may be selected by opportunely selecting the position of the feeding tube as well as by opportunely tensioning the string or cord.

The tying machine according to the present invention allows to avoid that the string or cord is twisted around the stuffed products, thus avoiding that the stuffed products may be broken or damaged by the string or cord. In fact, by means of the immobilizing devices (one or two, or more than two) it is avoided that the filled casing and/or the stuffed products be rotated during rotation of the tying means.

A further advantage offered by the tying machine according to the present invention relates to the simple structure of the machine; in fact, the tying machine according to the present invention comprises a single pair of jaws for crimping or squeezing the casing. Moreover, the levers for actuating the jaws do not interfere with the stuffed products so that the risk is avoided that the stuffed products may be damaged by the jaws or by their actuating levers.

The general structure of the machine according to the present invention allows moreover to simplify the tying operation, thus reducing or minimizing the risk of failures, problems and/or inconvenience during the tying operation. It arises therefore that the preparation time is drastically reduced and the production yields are improved, thus allowing to reduce the preparation costs. In the same way, also the maintenance and the cleaning operations are simplified.

Moreover, the fact that the tying machine according to the present invention comprises a single pair of jaws in a closed position, together with the fact that the string or cord is wound on the casing between the two jaws, allows to realize the ties exactly in correspondence with their end portions, thus avoiding that the end portions of the stuffed products are given an elongated shape, particularly disregarded by the consumers.

Due to the particular reciprocal disposition of its component parts, the tying machine according to the present invention is particularly stable and may be easily used. In particular, the embodiment wherein the source of power (motor) and the tying devices are positioned on opposite sides of the vertical wall allows the different weights to be uniformly distributed, thus conferring to the machine an increased stability. It is moreover possible to place the source of power and the tying devices inside corresponding protective covers fixed to the opposite sides of the vertical wall. An improved protection of the components parts of the tying machine is therefore obtained, thus avoiding that the component parts may be damaged or come into contact with cleaning products. In the same way, an increased security for the operators is obtained. Finally, also the electronic and electric parts of the tying machine such as, for instance, sensors, switching devices and the like, may be placed inside the protective covers.

Of course, the embodiments described above may be modified without departing from the scope of the present invention. For instance, the articulation of the delivering tube and the means for controlling the taking off of the casing from the tube may be provided either in combination or separately. It is therefore to be noted that the scope of the present invention is defined by the appending claims, comprising all forms equivalent to those claimed.

## Claims

1. Tying machine (1) for tying by means of a string or cord (13) dough or stuffed products (40) containing a paste, said machine being adapted to be fed or supplied with a tubular casing (4, 4p) filled with said paste along a predefined feeding direction, said machine comprising tying means (7) adapted to wind a portion of string or cord on said tubular casing **characterized in that**:
said tying machine (1) comprises at least one device (78) adapted to receive said filled casing (4, 4p) and to keep said casing (4, 4p) in a substantially resting condition.

2. Tying machine as claimed in claim 1, **characterized in that** said at least one device (78) is positioned upstream with respect to said tying means (7) in said predefined feeding direction.

3. Tying machine as claimed in one of claims 1 and 2, **characterized in that** said device (78) comprises a hollow body (68) adapted to receive said filled casing (4, 4p), and **in that** gripping means (88) are received inside said hollow bodyi (68), with said gripping means (88) being adapted to alternatively exert a grip on said filled casing (4, 4p).

4. Tying machine as claimed in claim 3, **characterized in that** said gripping means (88) comprise means (88a) received inside said hollow body (68), the volume of which may be alternatively changed so as to alternatively exert a grip on said filled casing (4, 4p).

5. Tying machine as claimed in claim 4, **characterized in that** said means (88a) comprise a body of an elastic material received inside said hollow body (68) so as to define a hollow space adapted to be alternatively filled and emptied with a liquid or gas through a conduit (65) provided in the hollow body (68).

6. Tying machine as claimed in one of claims 1 to 5, **characterized in that** said tying machine comprises advancing means adapted to advance said dough or stuffed products (40) along a predefined advancing direction, substantially corresponding to said predefined feeding direction.

7. Tying machine as claimed in claim 6, **characterized in that** said advancing means comprise a main body (18) adapted to receive said stuffed products (40), said main body comprising a first aperture adapted to allow said stuffed products to be introduced into said main body and a second aperture adapted to allow said stuffed products to exit said main body, said main body being adapted to be translated along said predefined advancing direction and comprising means (28) adapted to alternatively exert a grip on said stuffed products so as to pull or trail said stuffed products during its translating motion along said predefined advancing direction.

8. Tying machine as claimed in claim 7, **characterized in that** said gripping means (28) comprises means (28a) received inside main body (18), the volume of which may be alternatively changed so as to alternatively exert a grip on said stuffed products (40) inside the main body (18), thus allowing the stuffed products to be alternatively translated and allowing said main body to be freely moved with respect to said stuffed products.

9. Tying machine as claimed in claim 8, **characterized in that** said means (28a) comprise a body of an elastic material received inside said main body so as to define a hollow space adapted to be alternatively filled and emptied with a liquid or gas through a conduit (25) provided in the wall of the main body (18).

10. Tying machine as claimed in one of claims 1 to 9, **characterized in that** said tying means (7) comprise rotatable means (10) adapted to be rotated by means of a source of power, and **in that** said tying means comprise a container (15) adapted to contain a predefined portion or quantity of a string or cord (14) and to deliver predefined portions of said string or cord, said container being firmly fixed to said rotatable means (10) so that during rotation of said rotatable means a predefined portion of said string or cord is released and wound on said casing (4, 4p).

11. Tying machine as claimed in claim 10, **characterized in that** said rotatable means (10) comprise a gear wheel (9) and a flange (11) firmly fixed to one another, wherein said gear wheel is adapted to be rotated by said source of power.

12. Tying machine as claimed in one of claims 10-11, **characterized in that** said container (15) is firmly fixed to said gear wheel (9) and **in that** guiding means are provided for guiding the string or cord (13) from said container (15) to a position in proximity of said casing (4, 4p).

13. Tying machine as claimed in claim 11, **characterized in that** said guiding means comprise a conduit (15c) going through said rotatable means (10) and a guiding mechanism (12) firmly fixed to said flange (11) so as to wind the string or cord (13) on said casing (4).

14. Tying machine as claimed in one of claims 1-13, **characterized in that** said machine comprises means (15a, 15b) adapted to control the tension of the string or cord (13).

15. Tying machine as claimed in claim 14, **characterized in that** said means for controlling the tension of the string or cord comprise braking means (15a) firmly fixed to said container (15) and centrifugal means (15b) firmly fixed to the flange (11).

16. Tying machine as claimed in one of claims 1 to 15, **characterized in that** said machine comprises means (14) adapted to crimp or squeeze said casing.

17. Tying machine as claimed in claim 16, **characterized in that** said means (14) are adapted to crimp said tubular casing before said casing enters into the main body (18) and comprise a pair of jaws (14a, 14b) positioned one in front of the other in the predefined feeding direction and having the shape plates, both provided with corresponding apertures (14a')(14b') adapted to allow the casing (4b) to be advanced through the jaws.

18. Tying machine as claimed in claim 17, **characterized in that** both the apertures (14a')(14b') comprise a main portion and a secondary portion, wherein the main portions are larger than the secondary portions, and wherein said jaws (14a, 14b) are adapted to be actuated between a first position in which the two main portions are substantially aligned so as to allow the casing to be advanced and a second position in which the two secondary portions are substantially aligned so as to crimp or squeeze the tubular casing.

19. Tying machine as claimed in one of claims 17-18, **characterized in that** said jaws are firmly fixed to corresponding bars (20a, 20b) adapted to be rotated on their longitudinal axis, so that rotating said two bars allows the two jaws to be actuated between said first and second position.

20. Tying machine as claimed in claim 18, **characterized in that** the jaw (14a) positioned downstream in the predefined feeding direction is firmly fixed to a bar (20a) received in a corresponding seat or housing provided in the wall of the secondary body (16).

21. Tying machine as claimed in one of claims 19-20, **characterized in that** said first and second bars (20a, 20b) firmly fixed to said first and second jaws (14a, 14b), respectively, are actuated by levers adapted to rotate the two jaws simultaneously, wherein one jaw is rotated clockwise while the other jawis rotated counterclockwise.

22. Tying machine as claimed in one of claims 1-21, **characterized in that** said machine comprises a feeding tube (3) over which an empty casing (4) may be fitted like a sock, wherein said feeding tube comprises a first end portion adapted to be connected to a stuffing machine (2) for processing said paste and a second end portion (4b) opposed to said first end portion and adapted to deliver said paste.

23. Tying machine as claimed in claim 22, **characterized in that** said tube (3) comprises an articulation (3b) adapted to allow the end portion (4b) of the tube to be rotated within a predefined angle.

24. Tying machine as claimed in one of claims 22-23, **characterized in that** said machine comprises a mechanism (3e) adapted to control the taking off of the casing (4) from the tube (3).

25. Tying machine as claimed in claim 24, **characterized in that** said mechanism (3e) comprises a body (3f) of an elastic material adapted to be alternatively filed or emptied with a liquid or gas so that, when said body is filled, its volume increases and exerts a pressure on the casing (4) f itted over the tube (3).

26. Tying machine as claimed in one of claims 1-25, **characterized in that** said machine comprises at least a second device (98) adapted to receive said filled casing (4b) and to keep said casing in a substantially resting condition.

27. Tying machine as claimed in claim 26, **characterized in that** said at least one second device is positioned downstream with respect to said first device (78) in the predefined feeding direction.

28. Tying machine as claimed in one of claims 26 to 27, **characterized in that** said second device (98) comprises gripping means (99) adapted to alternatively exert a grip on said filled casing (4b).

29. Tying machine as claimed in claim 28, **characterized in that** said gripping means (99) comprises means, the volume of which may be alternatively changed so as to alternatively exert a grip on said filled casing (4b).

30. Tying machine as claimed in claim 29, **characterized in that** said gripping means (99) comprise a body of an elastic material defining a hollow space adapted to be alternatively filled and emptied with a liquid or gas through a conduit (65a).

31. Tying machine as claimed in one of claims 26-30, **characterized in that** said at least one second device (98) is received inside said secondary body (15).

32. A system for the preparation of stuffed products containing a paste comprising a machine (2) for processing said paste and adapted to deliver predefined portions of said paste, so as to fill or stuff a casing (4) with said paste, said system further comprising a tying machine (1) according to one of claims 1-31.

33. A system for the preparation of stuffed products containing a paste, said system comprising a device (80) adapted to receive a predefined quantity or portion of a casing (4b) filled with said paste, said system further comprising a tying machine according to one of claims 1-31.
